(19) Europäisches Patentamt
European Patent Office
Office européen des brevets

(11) **EP 3 396 202 B1**

(12) **EUROPEAN PATENT SPECIFICATION**

(45) Date of publication and mention
of the grant of the patent:
**09.06.2021 Bulletin 2021/23**

(21) Application number: **16878679.6**

(22) Date of filing: **20.12.2016**

(51) Int Cl.:
*F16G 1/08* (2006.01)   *B29D 29/10* (2006.01)
*C10M 133/16* (2006.01)   *C10M 159/06* (2006.01)
*F16G 1/00* (2006.01)   *F16G 5/00* (2006.01)
*F16G 5/06* (2006.01)   *F16G 5/20* (2006.01)
*C10N 30/00* (2006.01)   *C10N 40/00* (2006.01)

(86) International application number:
**PCT/JP2016/087905**

(87) International publication number:
**WO 2017/110790 (29.06.2017 Gazette 2017/26)**

(54) **FRICTION-TRANSMISSION BELT AND METHOD FOR MANUFACTURING SAME**

REIBUNGSÜBERTRAGUNGSRIEMEN UND VERFAHREN ZUR HERSTELLUNG DAVON

COURROIE DE TRANSMISSION À FROTTEMENT ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2015 JP 2015250509
12.12.2016 JP 2016240728**

(43) Date of publication of application:
**31.10.2018 Bulletin 2018/44**

(73) Proprietor: **Mitsuboshi Belting Ltd.
Kobe-shi, Hyogo 653-0024 (JP)**

(72) Inventors:
• **MIURA Yoshihiro
Kobe-shi
Hyogo 653-0024 (JP)**
• **TAKABA Susumu
Kobe-shi
Hyogo 653-0024 (JP)**
• **ISHIGURO Hisato
Kobe-shi
Hyogo 653-0024 (JP)**

(74) Representative: **Hoffmann Eitle
Patent- und Rechtsanwälte PartmbB
Arabellastraße 30
81925 München (DE)**

(56) References cited:
EP-A2- 0 722 053        WO-A1-2012/161141
JP-A- H07 293 641       JP-A- 2004 534 183
JP-A- 2008 144 965      JP-A- 2009 533 609
JP-A- 2010 151 209      JP-A- 2011 052 778
JP-A- 2013 024 349      JP-A- 2014 167 347
JP-A- 2014 209 028

**Description**

TECHNICAL FIELD

The present invention relates to a frictional power transmission belt in which a frictional power transmission surface is formed to be inclined in V-shape, such as a V-belt and a V-ribbed belt, and a manufacturing method thereof, and in particular relates to a frictional power transmission belt capable of improving a lateral pressure resistance received from a pulley, and a manufacturing method thereof.

BACKGROUND ART

Conventionally, a frictional power transmission belt such as a V-belt, a V-ribbed belt, and a flat belt has been known as a power transmission belt that transmits power. The V-belt or V-ribbed belt in which a frictional power transmission surface (V-shaped side surface) is formed of a V-angle is wound with tension applied between a drive pulley and a driven pulley, and rotates between two axes in a state where the V-shaped side surface is in contact with a V-groove of pulleys. In this process, power is transmitted by utilizing an energy accompanying a friction generated by a thrust between the V-shaped side surface and the V-groove of the pulley. In these frictional power transmission belts, a tension member (cord) is buried in a rubber body (between compression rubber layer and tension rubber layer) along a longitudinal direction of the belt, and this tension member (cord) plays a role that transmits the power from the drive pulley to the driven pulley. In addition, an adhesion rubber layer is generally provided in order to enhance adhesiveness between the tension member (cord) and rubber.

The V-belt includes a raw-edge type (raw-edge V-belt) in which the frictional power transmission surface (V-shaped side surface) is an exposed rubber layer, and a wrapped type (wrapped V-belt) in which the frictional power transmission surface (V-shaped side surface) is covered with a cover fabric, and they are properly used depending on an application from a difference in surface properties (friction coefficients of rubber layer and of cover fabric) of the frictional power transmission surface. In addition, the raw-edge type belt includes a raw-edge cogged V-belt in which flexibility is improved by providing cogs only on a lower surface (inner peripheral surface) of the belt or both the lower surface (inner peripheral surface) and an upper surface (outer peripheral surface) of the belt.

The raw-edge V-belt and the raw-edge cogged V-belt are mainly used for driving of general industrial machinery and agricultural machinery, for auxiliary driving in automobile engines, and the like. In addition, there is a raw-edge cogged V-belt called a variable speed belt used for a belt type continuously variable transmission device of a motorcycle or the like, as another application.

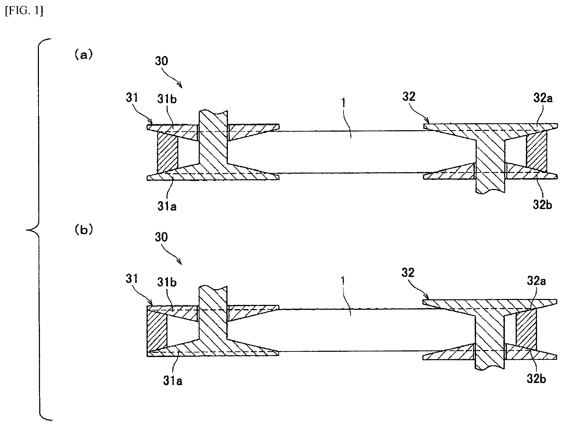

As illustrated in FIG. 1, a belt type continuously variable transmission device 30 is a device that steplessly changes a gear ratio by winding a frictional power transmission belt 1 around a drive pulley 31 and a driven pulley 32. Each pulley 31 and 32 includes stationary pulley pieces 31a and 32a fixed in the axial direction and movable pulley pieces 31b and 32b movable in the axial direction, and has a structure that can continuously change the width of the V-groove of the pulleys 31 and 32 formed of these stationary pulley pieces 31a and 32a and movable pulley pieces 31b and 32b. In the power transmission belt 1, both end surfaces in the width direction are formed as tapered surfaces of which inclines match with facing surfaces of the V-grooves of each pulley 31 and 32, and fit into any positions in the vertical direction on the facing surface of the V-grooves according to the width of the changed V-grooves. For example, when a state illustrated in (a) of FIG. 1 is changed to a state illustrated in (b) of FIG. 1 by reducing the width of the V-groove of the drive pulley 31 and increasing the width of the V-groove of the driven pulley 32, the power transmission belt 1 moves upward the V-groove on the drive pulley 31 side and downward the V-groove on the driven pulley 32 side, a winding radius to the pulleys 31 and 32 continuously changes and the gear ratio can be steplessly changed. The variable speed belt used for such an application is used with a harsh layout at a high load as well as the belt being significantly bent. That is, specific design has been made to withstand not only a winding rotation between two axes of the drive pulley and the driven pulley but also harsh movements in high load environments such as a movement in the radial direction of the pulley, and a repeated bending motion due to a continuous change of the winding radius.

Therefore, one of important factors responsible for durability of the frictional power transmission belt such as a variable speed belt is the lateral pressure resistance received from the pulley. Conventionally, as a formulation to improve the lateral pressure resistance, a rubber composition having a large mechanical characteristic reinforced by compounding short fibers or the like is used for the compression rubber layer and the tension rubber layer. On the other hand, a rubber composition having a relatively low mechanical characteristic is used as an adhesive rubber because a bending fatigue resistance decreases when the mechanical characteristic is excessively increased.

For example, JP-A H10-238596 discloses a power transmission V-belt in which a rubber hardness of at least one of the tension and compression rubber layers is set to be in a range of 90° to 96°, a rubber hardness of the adhesion rubber layer is set to be in a range of 83° to 89°, and aramid short fibers are made to orient in the width direction of the belt in the tension and compression rubber layers. In this literature, occurrence of cracks and separations (peelings) of each rubber layer and cord at an early stage are prevented and a lateral pressure resistance is improved so that high load transmission capability is improved.

However, from a viewpoint of compounding design of such a rubber composition, the following problems (1) to (4) which are caused by running of the belt in a high load environment and are factors for a decrease in durability (life) are concerned.

(1) In the case where adhesiveness between a cord and an adhesive rubber is low, peeling occurs between the cord and the adhesive rubber.
(2) In the case where the friction coefficient of a contact surface (power transmission surface) with the pulley is high, the belt does not smoothly move, so that the belt is easily deformed (in particular, buckling called dishing).
(3) As the belt moves in the radial direction of the pulley or deforms (buckles), a shear stress occurs inside the belt, in particular, the shear stress is likely to concentrate on the interfaces where there are differences in mechanical characteristic (in this case, interface between compression rubber or tension rubber and adhesion rubber), and interfacial peeling (cracks) occurs.
(4) The contact surface (power transmission surface) with the pulley is abraded by sliding with the pulley.

Furthermore, in recent years, in addition to durability (lateral pressure resistance), it is required to improve fuel saving performance, and therefore it is necessary to improve power transmission efficiency (reduce power transmission loss) to improve fuel efficiency. However, the lateral pressure resistance and fuel saving performance of the power transmission belt are in an antinomic relationship. For example, it has been known that in the case where the compression rubber layer of the V-belt is blended with a reinforcing material such as a short fiber, carbon black, and silica so as to increase the rubber hardness to improve the lateral pressure resistance, the bending rigidity is increased and thus, the power transmission loss occurs especially in a layout of a small pulley diameter.

Specifically, in the variable speed belt used for a belt type continuously variable transmission device of a motorcycle or the like, it is a big problem to achieve both the lateral pressure resistance and the fuel saving performance, and for example, JP-A 2012-241831 discloses a power transmission belt provided with a compression rubber layer containing a fatty acid amide and a short fiber. In addition, JP-A 2013-24349 discloses a power transmission V-belt in which short fibers are buried in a compression rubber layer and tension rubber layer so as to be oriented in the width direction, and the short fibers protrude at least on the side surface of the tension rubber layer. Furthermore, JP-A 2015-152101 discloses a double cogged V-belt in which a lower cog forming portion and an upper cog forming portion are formed of a rubber composition having specific dynamic viscoelasticity by containing 40 to 80 parts by weight of filler based on 100 parts by weight of rubber in which the filler contains 30% or more of silica. That is, in these literatures, various techniques for achieving both the lateral pressure resistance and the fuel saving performance have been disclosed.

Factors that influence the power transmission efficiency include (1) flexibility in the circumferential direction of the belt, (2) rigidity in the width direction of the belt (lateral pressure resistance), and (3) friction coefficient of the frictional power transmission surface. The power transmission efficiency can be enhanced (power transmission loss can be reduced) by means of (1) increasing the flexibility in the circumferential direction of the belt (reducing bending rigidity to cause it easier to bend), (2) increasing the rigidity in the width direction of the belt (lateral pressure resistance), and (3) reducing the friction coefficient of the frictional power transmission surface (lowering frictional force of frictional power transmission surface to make sliding with pulley smooth), respectively. In JP-A 2012-241831, JP-A 2013-24349, and JP-A 2015-152101, means to balance the durability and speed change characteristics (acceleration performance) while improving the power transmission efficiency have been proposed with the design concepts focusing on any one of the factors (1) to (3).

For example, in order to reduce a frictional force of a frictional power transmission surface, there has been known a method capable of decreasing a friction coefficient of the frictional power transmission surface by exposing or protruding short fibers which are blended in a compression rubber layer to be oriented in the width direction of a belt, to the frictional power transmission surface. However, in the case where the amount of short fibers exposed or protruded is large, the friction coefficient of the frictional power transmission surface becomes small and the power transmission efficiency improves, but cracks starting from short fibers are likely to occur. A crack leads to poor appearance of the belt and further, crack growth leads to breakage of the belt. On the other hand, in the case where the amount of short fibers is small, the friction coefficient of the frictional power transmission surface increases, the power transmission efficiency decreases (lateral pressure resistance also decreases). There has been a limit in a method of balancing durability (lateral pressure resistance) and fuel saving performance (friction coefficient reduction and power transmission efficiency) by adjusting the blending amount of short fibers and the degree of exposure (or protrusion). Therefore, even with the belts of JP-A 2012-241831, JP-A 2013-24349, and JP-A 2015-152101, it cannot be said that both the lateral pressure resistance and the fuel saving performance are achieved at a high level.

JP-A 2007-92987 discloses a belt power transmission device in which a portion of a frictional power transmission surface is formed of a rubber composition blended with 10 to 25 parts by weight of an ether ester plasticizer and 60 to 110 parts by weight of an inorganic filler based on 100 parts by weight of an ethylene α-olefin elastomer. This literature discloses a compression layer containing short fibers in which the short fibers are oriented in the width direction.

Furthermore, JP-A 2010-151209 discloses a power transmission belt in which short fibers and a lubricant are blended into a rubber as a compression rubber layer, so that the friction coefficient in a belt movement method on a side surface of a belt is adjusted to be within the range of 0.3 to 0.8. This literature describes a solid lubricant such as graphite, molybdenum disulfide, polytetrafluoroethylene, mica, talc, polyolefin resin powder, and paraffin wax, and a liquid lubricant such as silicone oil and paraffin-based oil, as the lubricant, and describes that graphite, molybdenum disulfide, mica, and talc are preferable. In Examples, 15 to 45 parts by mass of aramid short fibers are blended with 100 parts by mass of chloroprene rubber, and graphite and silicone oil are blended as the lubricant.

However, even with the belt of JP-A 2007-92987 and JP-A 2010-151209, it cannot be said that both the lateral pressure resistance and the fuel saving performance are achieved at a high level. That is, the lateral pressure resistance and fuel saving performance are in the antinomic relationship, and it has been difficult to satisfy both of them.

A further example of the prior art can be seen in document EP 0 722 053 A2.

SUMMARY OF INVENTION

TECHNICAL PROBLEM

An object of the present invention is to provide a frictional power transmission belt which can improve lateral pressure resistance while maintaining fuel saving performance, and a manufacturing method thereof.

Another object of the present invention is to provide a frictional power transmission belt which can improve power transmission efficiency under a high load condition and/or high speed condition even when applied to a variable speed belt and can suppress occurrence of cracks even when used over a long period of time, and a manufacturing method thereof.

SOLUTION TO PROBLEM

As a result of intensive studies to achieve the above object, the present inventors found that by bringing a lubricant containing wax on at least a portion of a frictional power transmission surface of a frictional power transmission belt provided with a compression rubber layer formed of a vulcanization product of a rubber composition containing a rubber component and short fibers, lateral pressure resistance can be improved while maintaining fuel saving performance, and completed the present invention.

That is, a frictional power transmission belt according to the present invention is a frictional power transmission belt including the features of claim 1. An area ratio occupied by the lubricant to an entire frictional power transmission surface may be 50% or more. A melting point of the lubricant may be a vulcanization temperature of the compression rubber layer or lower. The lubricant may contain a lubricant having a melting point with a difference of □ 30 □ C from an operating temperature of the belt. The lubricant may further contain a fatty acid amide. The rubber composition may contain the lubricant. A proportion of the lubricant may be approximately 0.5 to 10 parts by mass based on 100 parts by mass of the rubber component. A proportion of the short fibers may be 30 parts by mass or less based on 100 parts by mass of the rubber component. The short fibers may protrude on the frictional power transmission surface, and in particular, the lubricant may form a lubricant layer on the frictional power transmission surface and the short fibers may protrude from the surface of the lubricant layer. The short fibers may be oriented in a width direction of the belt. The rubber component may contain chloroprene rubber.

The present invention also includes a manufacturing method of the frictional power transmission belt, including the features of claim 12. The lubricant exposing step may include a vulcanizing step of vulcanizing a rubber composition containing a rubber component and short fibers to obtain a belt sleeve, and a cutting step of cutting the obtained belt sleeve in a longitudinal direction of the belt to form a compression rubber layer. The lubricant exposing step may further include a grinding step of grinding a side surface of the compression rubber layer obtained in the cutting step to protrude the short fibers.

ADVANTAGEOUS EFFECTS OF INVENTION

In the present invention, since the lubricant containing wax is present in at least a portion of the frictional power transmission surface of the frictional power transmission belt provided with a compression rubber layer formed of a vulcanization product of the rubber composition containing a rubber component and short fibers, the fuel saving performance (power transmission efficiency) and the lateral pressure resistance (durability) can be improved. Specifically, when the compression rubber layer is formed of the rubber composition containing the wax, since the wax blooms (exudes) and covers the surface of the compression rubber layer (frictional power transmission surface) to adhere thereto without performing surface treatment, a friction coefficient of the frictional power transmission surface is decreased, the slidability with the pulley is improved, and the transmission loss can be reduced. In addition, in the case where the short fibers are appropriately blended, both the lateral pressure resistance and bending easiness of the belt can be achieved. That is, since the friction coefficient of the frictional power transmission surface is decreased by the wax, the short fibers are not excessively increased and thus, occurrence of cracks starting from the short fibers can be suppressed. In addition, in the case where the short fibers are caused to protrude on the frictional power transmission surface, the friction coefficient can be further reduced by the combined effect of the short fibers and the wax. Therefore, even in the case of being applied to a variable speed belt, the power transmission efficiency can be improved under the high load condition and/or high speed condition, and the occurrence of cracks can be suppressed even when used over a long period of time.

BRIEF DESCRIPTION OF DRAWINGS

[FIG. 1] FIG. 1 is a schematic view for explaining a transmission mechanism of a belt type continuously variable transmission device.
[FIG. 2] FIG. 2 is a schematic perspective view illustrating an example of a frictional power transmission belt of the present invention.
[FIG. 3] FIG. 3 is a schematic cross-sectional view of the frictional power transmission belt of FIG. 2 cut in a longitudinal direction of a belt.
[FIG. 4] FIG. 4 is a schematic cross-sectional view illustrating an example of a compression rubber layer of the frictional power transmission belt of the present invention.
[FIG. 5] FIG. 5 is a schematic cross-sectional view illustrating another example of a compression rubber layer of the frictional power transmission belt of the present invention.
[FIG. 6] FIG. 6 is a schematic cross-sectional view illustrating still another example of a compression rubber layer of the frictional power transmission belt of the present invention.
[FIG. 7] FIG. 7 is a schematic view for explaining a measuring method of power transmission efficiency.
[FIG. 8] FIG. 8 is a schematic view for explaining a measuring method of a friction coefficient in Example.
[FIG. 9] FIG. 9 is a schematic view for explaining a high load running test in Example.
[FIG. 10] FIG. 10 is a schematic view for explaining a high speed running test in Example.
[FIG. 11] FIG. 11 is a schematic view for explaining a durability running test in Example.
[FIG. 12] FIG. 12 is an electron micrograph of a surface of a compression rubber layer in the belt obtained in Example 4.

DESCRIPTION OF EMBODIMENTS

[Structure of Frictional Power Transmission Belt]

A frictional power transmission belt of the present invention only have to contain a lubricant containing wax present on at least a portion of a frictional power transmission surface of a compression rubber layer formed of a vulcanization product of a rubber composition containing a rubber component and a short fiber, but normally may be provided with a tension member extending in the longitudinal direction of a belt, an adhesion rubber layer in which the tension member is buried, the compression rubber layer formed on one surface of the adhesion rubber layer, and an tension rubber layer formed on the other surface of the adhesion rubber layer.

Examples of the frictional power transmission belt of the present invention include a V-belt [wrapped V-belt, raw-edge V-belt, and raw-edge cogged V-belt (raw-edge cogged V-belt with cog formed on the inner peripheral side of the raw-edge belt, and raw-edge double cogged V-belt in which cogs are formed on both the inner peripheral side and the outer peripheral side of the raw-edge belt)], a V-ribbed belt, a flat belt, and the like. Among these frictional power transmission belts, the V-belt or the V-ribbed belt in which a frictional power transmission surface is formed to be inclined in a V-shape (at V-angle) is preferable from the viewpoint of receiving a large lateral pressure from a pulley. The raw-edge cogged V-belt is particularly preferable from the viewpoint of being used for a belt type continuously variable transmission device that requires high achievement both a lateral pressure resistance and fuel saving performance.

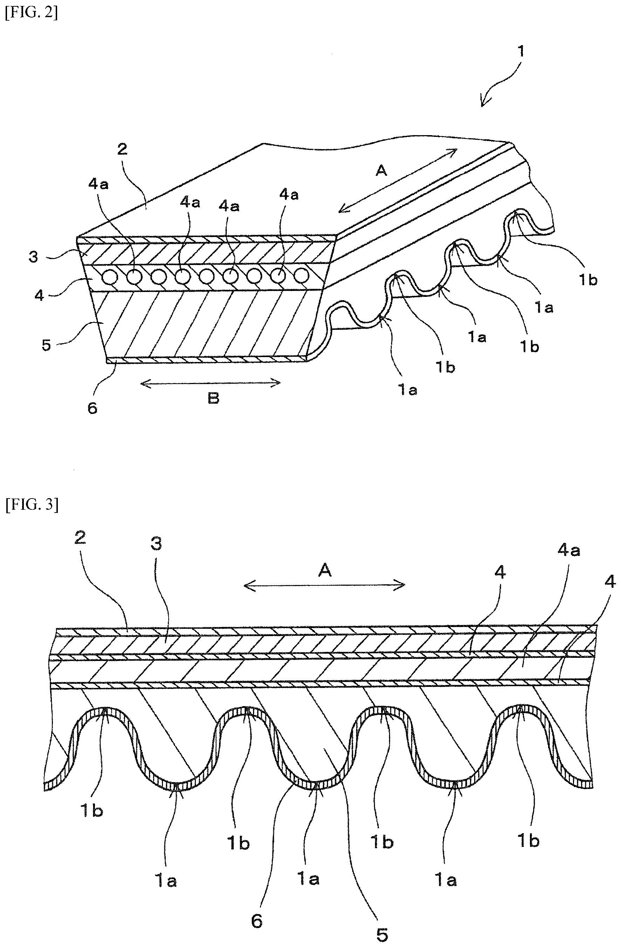

FIG. 2 is a schematic perspective view illustrating an example of the frictional power transmission belt (raw-edge cogged V-belt) of the present invention. FIG. 3 is a schematic cross-sectional view of the frictional power transmission belt of FIG. 2 cut in the longitudinal direction of the belt.

In this example, a frictional power transmission belt 1 has a plurality of cog portions 1a formed on the inner circumferential surface of a belt main body at predetermined intervals along the longitudinal direction (direction A in the drawing) of the belt. The cross-sectional shape of the cog portion 1a in the longitudinal direction is substantially semicircular (curved or corrugated), and the cross-sectional shape in the direction orthogonal to the longitudinal direction (width direction or direction B in the drawing) is trapezoidal. That is, each cog portion 1a protrudes in a substantially semicircular shape in the cross section in the A direction from a cog bottom portion 1b in the thickness direction of the belt. The frictional power transmission belt 1 has a laminated structure, and a reinforcing fabric 2, a tension rubber layer 3, an adhesion rubber layer 4, a compression rubber layer 5, and a reinforcing fabric 6 are sequentially laminated from the outer peripheral side of the belt toward the inner peripheral side (side where cog portion 1a is formed). The cross-sectional shape in the width direction of the belt has the trapezoidal shape in which the belt width decreases from the outer peripheral side to the inner peripheral side of the belt. Furthermore, a tension member 4a is buried in the adhesion rubber layer 4, and the cog portion 1a is formed on the compression rubber layer 5 by a mold with a cog.

[Compression Rubber Layer]

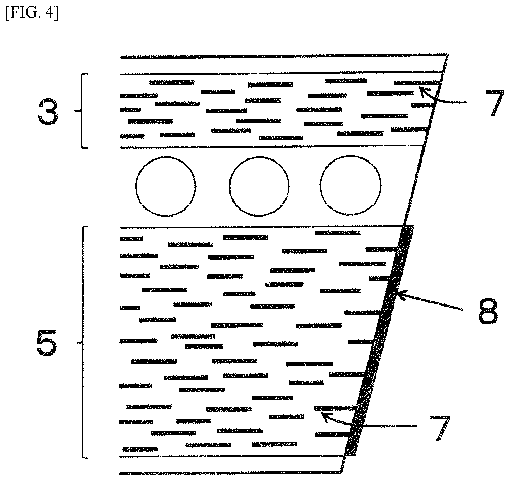

In the present invention, the compression rubber layer is formed of a vulcanization product of a rubber composition containing a rubber component and short fibers, and a lubricant containing wax is present on at least a portion of the frictional power transmission surface. In the present invention, the short fibers are blended with the rubber composition forming the compression rubber layer which significantly receives a lateral pressure and frictional force from a pulley, and the short fibers are preferably made to orient in the width direction of the belt to ensure lateral pressure resistance. The blending amount of the short fibers is preferably set to the minimum necessary for ensuring the lateral pressure resistance. Furthermore, the lubricant containing wax is brought on at least a portion of the frictional power transmission surface, so that a friction coefficient of the frictional power transmission surface is reduced (slidability is improved). FIG. 4 is a schematic cross-sectional view illustrating an example of a compression rubber layer of the frictional power transmission belt of the present invention. As illustrated in FIG. 4, in this frictional power transmission belt, short fibers 7 are oriented in the width direction of the belt inside a compression rubber layer 5 and a tension rubber layer 3, respectively, and a lubricant 8 is adhered to a frictional power transmission surface of the compression rubber layer 5. The lubricant only has to be present on the frictional power transmission surface. The lubricant may be added in the rubber composition forming the compression rubber layer, and after vulcanization, the belt sleeve may be cut in the longitudinal direction of the belt, so that the lubricant may be made to bloom from the inside of the compression rubber layer to adhere to the surface (frictional power transmission surface). In the present invention, since the blending amount of the short fibers can be adjusted to the minimum necessary due to the presence of the lubricant, the bending rigidity of the belt can be kept small while maintaining the lateral pressure resistance. Therefore, both the friction coefficient (improvement of slidability) and the bending rigidity (improvement of flexibility) can be reduced, and small transmission loss and fuel saving performance can be ensured. That is, by using a combination of the short fibers and the lubricant (wax), the lateral pressure resistance and the fuel saving performance (both flexibility and slidability) can be improved.

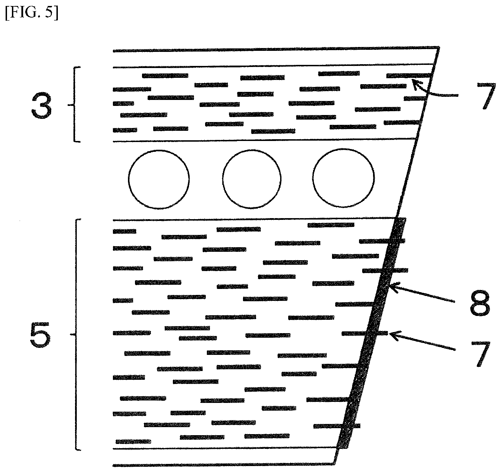

FIG. 5 is a schematic cross-sectional view illustrating another example of the compression rubber layer of the frictional power transmission belt of the present invention. In this frictional power transmission belt, the lubricant 8 is present on the frictional power transmission surface, and the short fibers 7 are protruded (or exposed) on the frictional power transmission surface. Specifically, on the frictional power transmission surface, the lubricant 8 is adhered around the protruded short fibers 7 to cover the frictional power transmission surface, and a tip end of the protruded short fibers 7 is not covered and is exposed. In this embodiment, since the short fibers protrude, the slidability of the frictional power transmission surface can be further improved.

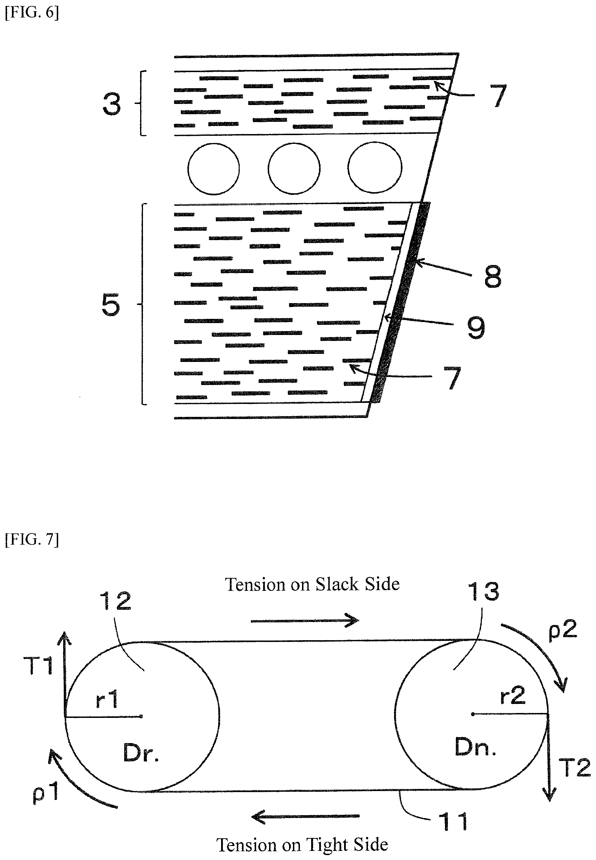

FIG. 6 is a schematic cross-sectional view illustrating still another example of the compression rubber layer of the frictional power transmission belt of the present invention. In this frictional power transmission belt, the lubricant 8 is contained in a surface rubber layer 9 and is made to bloom to be present on the surface of the surface rubber layer 9.

(Lubricant)

As described above, the lubricant present on the surface of the frictional power transmission surface may be a lubricant exuded from the lubricant contained in the rubber composition forming the compression rubber layer, may be a lubricant adhered to the frictional power transmission surface, or may be a lubricant contained in the surface rubber layer containing the lubricant. Among these, the lubricant exuded from the rubber composition forming the compression rubber layer is preferable from the viewpoint that the effect of the lubricant can be sustained over a long period of time.

In the case where the lubricant is in a liquid state at the operating temperature of the belt, lubricity is reduced. Therefore, it is necessary to select a lubricant having a melting point suitable for the operating temperature of the belt.

Specifically, in the case where the lubricant is made to exude from the rubber composition forming the compression rubber layer, in order to bloom the lubricant on the frictional power transmission surface, it is preferable to use a lubricant having low compatibility with the rubber component forming the compression rubber layer and having a relatively low melting point and molecular weight. This is because, when approaching the melting point, the molecule is likely to move, and the lubricant is likely to moves to the surface side of the compression rubber layer. First, in a vulcanizing step in a manufacturing process of the belt, the lubricant melts and moves to the surface side where the frictional power transmission surface is formed inside the rubber composition. Furthermore, the lubricant is exposed to the frictional power transmission surface in the cutting step. And in the cutting step and the subsequent grinding step, the lubricant is promoted to melt due to the frictional heat of cutting and grinding, to bloom from the inside of the compression rubber layer, to move to the frictional power transmission surface. Furthermore, even during running of the belt, the lubricant is extruded from the inside of the compression rubber layer by bending deformation of the belt and blooms to the frictional power transmission surface. At that time, in the case where the melting point of the lubricant is excessively higher than the operating temperature of the belt, the lubricant is less likely to bloom on the surface of the compression rubber layer. In the case where the melting point of the lubricant is excessively lower than the operating temperature of the belt, the lubricant becomes a liquid and the lubricity is reduced. Therefore, as the lubricant, a lubricant having a melting point (melting point near the operating temperature) suitable for the operating temperature of the belt is selected. As described above, also in the cutting step and the grinding step, the lubricant melts and blooms to the frictional power transmission surface. Since the compression rubber layer contains the short fibers, the lubricant is likely to pass through the interface between the rubber component and the short fibers to bloom. Therefore, the compression rubber layer in which the short fibers protrude (or expose) on the frictional power transmission surface is preferable.

The melting point (or softening point) of the lubricant is preferably a vulcanization temperature of the compression rubber layer or lower, and for example, may be approximately (vulcanization temperature -150)°C to (vulcanization temperature -10)°C, preferably (vulcanization temperature -130)°C to (vulcanization temperature -30)°C, and more preferably (vulcanization temperature -120)°C to (vulcanization temperature -50)°C.

Furthermore, the lubricant preferably contains a lubricant having a melting point in the vicinity of the operating temperature (surface temperature) of the belt, for example, preferably contains a lubricant having a melting point with a difference from the operating temperature of the belt being within ±30°C, preferably within ±20°C, and more preferably ±10°C (particularly within ±5°C). In the present invention, in the case where the operating temperature of the belt is in a wide range, the maximum temperature is defined as the operating temperature of the belt. In such a case, a plurality of lubricants having different melting points are preferably combined.

Specifically, the melting point (or softening point) of the lubricant may be 150°C or less and may be, for example, approximately 35°C to 140°C, preferably 45°C to 130°C, and more preferably 50°C to 120°C. In the present invention, the melting point of the lubricant can be measured by using a differential scanning calorimeter (DSC), and in the case of a mixture, it means the average value of the respective melting points.

The occupied area ratio of the lubricant to the entire frictional power transmission surface is preferably 50% or more and may be, for example, approximately 50% to 100%, and preferably 80% to 100%. In the case where the area occupied by the lubricant is too small, there is a possibility that a lubricity may be lowered. In the present invention, the occupied area of the lubricant can be measured by a method of photographing the frictional power transmission surface by using a scanning electron microscope (model number: JSM 5900 LV, manufactured by JEOL Ltd.), and recognizing the difference in shading between the lubricant and the other (fiber and rubber) by a measuring software ("Stream" manufactured by Olympus Corporation).

In the present invention, in the case where the short fibers do not protrude on the frictional power transmission surface, a lubricant layer in which the entire frictional power transmission surface is coated with a lubricant is preferably formed. In the case where the short fibers protrude on the frictional power transmission surface, a lubricant layer in which the entire region of the frictional power transmission surface excluding the protruding portions of the short fibers (or vicinity of tip end of protruding portion) is coated with a lubricant is preferably formed.

In the case where the compression rubber layer contains the lubricant, the proportion of the lubricant can be selected from the range of approximately 0.1 to 30 parts by mass based on 100 parts by mass of the rubber component, and may be, for example, approximately 0.3 to 20 parts by mass, preferably 0.5 to 10 parts by mass (e.g., 2 to 6 parts by mass), and more preferably 3 to 8 parts by mass (particularly 4 to 7 parts by mass). In the case where the proportion of the lubricant is too small, there is a possibility that the lubricity may decrease. In the case of too large, there is a possibility that the mechanical properties of the compression rubber layer may decrease.

(A) Wax

The lubricant contains a wax from the viewpoint that it has a high effect of improving the slidability of the frictional power transmission surface and is likely to bloom to the frictional power transmission surface even when it is contained inside the compression rubber layer.

Examples of the wax include aliphatic hydrocarbon waxes (e.g., poly $C_{2-4}$ olefin wax such as polyethylene wax, ethylene copolymer wax and polypropylene wax, paraffin wax such as natural paraffin and synthetic paraffin, microcrystalline wax, etc.), vegetable or animal wax (e.g., carnauba wax, bees wax, shellac wax, montan wax, etc.), and the like.

These waxes can be used alone or in combination of two or more kinds thereof. Among these waxes, from the viewpoint of good slidability, paraffin such as normal paraffin (linear hydrocarbon), isoparaffin and cycloparaffin, and aliphatic hydrocarbon wax such as microcrystalline wax (particularly, combination of paraffin and microcrystalline wax) are preferable. In the case of combining paraffin and microcrystalline wax, the mass ratio of both can be selected from the range of paraffin/microcrystalline wax = approximately 10/1 to 1/10.

The melting point (or softening point) of the wax may be 35°C or more and, for example, may be approximately 35°C to 120°C, preferably 40°C to 120°C (particularly 50°C to 100°C), and more preferably 45°C to 90°C (particularly 50°C to 80°C). In the case where the melting point is too low, there is a possibility that the lubricity may be decreased. In the case of too high, there is a possibility that blooming may be suppressed in the case of being blended inside the compression rubber layer.

(B) Fatty Acid Amide

In the case where the operating temperature of the belt is relatively high, the lubricant preferably contains a fatty acid amide in addition to the wax.

Examples of the fatty acid amide include higher fatty acid monoamides, for example, saturated or unsaturated higher fatty acid amides or monoamides such as behenic acid amide, arachidic acid amide, stearic acid amide, hydroxystearic acid amide, palmitic acid amide, myristic acid amide, lauric acid amide, erucic acid amide, oleic acid amide, and ricinoleic acid amide; saturated or unsaturated higher fatty acid bis-amides such as alkylene bis-saturated or unsaturated higher fatty acid amides (e.g., $C_{1-10}$ alkylene bis-saturated or unsaturated higher fatty acid amides such as methylene bis-stearic acid amide, methylene bis-lauric acid amide, methylene bis-hydroxystearic acid amide, methylene bis-oleic acid amide, ethylene bis-behenic acid amide, ethylene bis-stearic acid amide, ethylene bis-caprylic acid amide, ethylene bis-capric acid amide, ethylene bis-lauric acid amide, isostearic acid amide, ethylene bis-erucic acid amide, ethylene bis-oleic acid amide, tetramethylene bis-stearic acid amide, hexamethylene bis-behenic acid amide, hexamethylene bis-stearic acid amide, hexamethylene bis-hydroxystearic acid amide, and hexamethylene bis-olein acid amide, etc.), and bis-amides of a dicarboxylic acid with a saturated or unsaturated higher amine (e.g., bis-amides formed by reaction of a $C_{6-12}$ alkanedicarboxylic acid such as N,N'-distearyl adipic acid amide, N,N'-distearyl sebacic acid amide, N,N'-dioleyl adipic acid amide, and N,N'-dioleyl sebacic acid amide, with a saturated or unsaturated higher amine, etc.).

In addition to aromatic bis-amides (bis-amides of an aromatic diamine such as xylylene bis-stearic acid amide with a saturated or unsaturated higher fatty acid, bis-amides of an aromatic dicarboxylic acid such as N,N'-distearyl phthalic acid amide with a saturated or unsaturated higher amine, etc.), examples of the fatty acid amide include substituted amides (higher fatty acid amides in which a saturated or unsaturated higher fatty acid residue is amide-bonded to the nitrogen atom of amide group, such as N-lauryl lauric acid amide, N-palmityl palmitic acid amide, N-stearyl stearic acid amide, N-stearyl oleic acid amide, N-oleyl stearic acid amide, N-stearyl erucic acid amide, and N-stearyl hydroxyl stearic acid amide), ester amides (ester amides in which a hydroxyl group of an alkanolamine and a higher fatty acid are ester-bonded to each other and an amino group of the alkanolamine and another higher fatty acid are amide-bonded to each other, such as ethanolamine dibehenate, ethanolamine distearate, ethanolamine dipalmitate, propanolamine distearate, and propanolamine dipalmitate), alkanol amides (methylol amides such as methylol higher fatty acid monoamides such as methylol stearic acid amide and methylol behenic acid amide; N-hydroxy $C_{2-4}$ alkyl higher fatty acid monoamides such as stearic acid monoethanol amide and erucic acid monoethanol amide), and substituted ureas (substituted ureas in which a higher fatty acid is amide-bonded to the nitrogen atom of urea, such as N-butyl-N'-stearyl urea, N-phenyl-N'-stearyl urea, N-stearyl-N'-stearyl urea, xylylene bis-stearyl urea, toluylene bis-stearyl urea, hexamethylene bis-stearyl urea, diphenylmethane bis-stearyl urea). In these fatty acid amides, the number of carbon atoms of the higher fatty acid and the higher amine may be approximately 10 to 34 (e.g., 10 to 30, preferably 10 to 28, and more preferably 12 to 24).

These fatty acid amides can be used alone or in combination of two or more kinds thereof. Of these fatty acid amides, saturated or unsaturated higher fatty acid monoamides such as stearic acid amide and oleic acid amide (particularly, saturated or unsaturated higher fatty acid monoamides having a higher fatty acid carbon number of 16 to 20) are preferable.

The melting point of the fatty acid amide can be selected from the range of approximately 50°C to 200°C, and normally may be approximately 65°C to 150°C, preferably 80°C to 140°C, and more preferably 90°C to 130°C (particularly 100°C to 120°C).

The proportion of the fatty acid amide is, for example, approximately 25 to 100 parts by mass, preferably 30 to 80 parts by mass, and more preferably 40 to 50 parts by mass, based on 100 parts by mass of the wax. In the case where the proportion of the fatty acid amide is too small, there is a possibility that the lubricity in use at a high temperature may decrease. On the other hand, in the case of too large, there is a possibility that blooming may be suppressed in the case of being blended in the compression rubber layer.

(C) Other Lubricants

The lubricant may contain another lubricant in addition to wax (and the fatty acid amide). Examples of other lubricants include silicone compounds (e.g., silicone oil, silicone wax, silicone resin, polyorganosiloxane having a polyoxyalkylene unit, etc.), fluorine-containing compounds (e.g., fluorine oil, polytetrafluoroethylene, etc.), and the like. These other lubricants can be used alone or in combination of two or more kinds thereof.

The proportion of other lubricants is 50% by mass or less and may be, for example, approximately 0.01% to 30% by mass, preferably 0.05% to 20% by mass, and more preferably 0.1% to 10% by mass, based on the entire lubricant.

The proportion of the wax to the whole lubricant is, for example, approximately 30% by mass or more, preferably 30% to 100% by mass, and more preferably 50% to 100% by mass. In addition, the total proportion of the wax and the fatty acid amide is, for example, 50% by mass or more, preferably 80% by mass or more, and more preferably 90% by mass or more, based on the whole lubricant.

(Short Fibers)

As short fibers, for example, use can be widely made of synthetic fibers such as polyolefin fibers (polyethylene fiber, polypropylene fiber, etc.), polyamide fibers (polyamide 6 fiber, polyamide 66 fiber, polyamide 46 fiber, aramid fiber, etc.), polyalkylene arylate fibers [poly$C_{2-4}$ alkylene$C_{6-14}$ arylate fibers such as polyethylene terephthalate (PET) fiber, polyethylene naphthalate (PEN) fiber, etc.], vinylon fibers, polyvinyl alcohol fibers, and polyparaphenylene benzobisoxazole (PBO) fiber; natural fibers such as cotton, hemp, and wool; and inorganic fibers such as a carbon fiber. These short fibers can be used alone or in combination of two or more kinds thereof. Among these short fibers, the synthetic fibers or natural fibers, particularly the synthetic fibers (polyamide fibers, polyalkylene arylate fibers, etc.), and more particularly the short fibers containing at least the aramid fiber, are preferable from the viewpoint of being rigid, having high strength and modulus, and of easily protruding on the compression rubber layer surface. The aramid short fiber also has high abrasion resistance. The aramid fiber is commercially available, for example, under the trade names "Conex", "Nomex", "Kevlar", "Technora", "Twaron", and the like.

In order to suppress compression deformation of the belt against pressing from the pulley, the short fibers are preferably buried in the compression rubber layer to be oriented in the width direction of the belt. In addition, allowing the short fibers to protrude from the surface of the compression rubber layer is preferable because noise (sound generation) can be suppressed by reducing the friction coefficient of the surface or abrasion due to rubbing with the pulley can be reduced. The average length of the short fibers may be, for example, approximately 1 to 20 mm, preferably 1.2 to 15 mm (e.g., 1.5 to 10 mm), and still preferably 2 to 5 mm (especially 2.5 to 4 mm). In the case where the average length of the short fibers is too short, there is a possibility that the mechanical characteristic (e.g., modulus) in the grain direction may not be sufficiently enhanced. On the contrary, in the case of too long, there is a possibility that poor dispersion of the short fibers in the rubber composition may occur, cracks may occur in rubber, and the belt may be damaged at an early stage.

The average protrusion height of the short fibers on the entire frictional power transmission surface is preferably 50 $\mu$m or more and, for example, approximately 50 to 200 $\mu$m, preferably 60 to 180 $\mu$m, and more preferably 70 to 160 $\mu$m (particularly 80 to 150 $\mu$m). In the case where the average protrusion height is too small, there is a possibility that the friction coefficient of the surface may not be sufficiently reduced. On the contrary, in the case of too large, damage and falling are likely to occur. For example, the average protrusion height can be determined by observing the section cut in the width direction of the belt with an electron microscope or the like with a magnification, measuring a plurality (e.g., 10 to 1,000, preferably 30 to 500, more preferably 50 to 200, and particularly approximately 100) of lengths (protrusion height) of short fibers protruding from the side surface of the belt, and averaging them.

The average fiber diameter of the short fibers is, for example, approximately 1 to 100 $\mu$m, preferably 3 to 50 $\mu$m, and more preferably 5 to 30 $\mu$m (particularly 10 to 20 $\mu$m). In the case where the average fiber diameter is too large, there is a possibility that the mechanical properties of the compression rubber layer may be decreased, and in the case of too small, there is a possibility that a friction coefficient of the surface may not be sufficiently reduced.

The shape of the short fibers in the protruding portion is not particularly limited, and may be a shape protruding substantially perpendicularly from the side surface, a shape curled in one direction (e.g., grinding direction), a shape in which the tip portion is fibrillated, and a shape such as a flowering shape melted by heat during grinding. Furthermore, it may be a shape described in JP-A-H07-98044 and JP-A-H07-151191.

In the present invention, since the proportion of short fibers can be reduced to a small amount by combining with the lubricant present on the frictional power transmission surface, the bending rigidity of the belt can be reduced, and the power transmission efficiency of the belt can be improved. The proportion of the short fibers may be 30 parts by mass or less, for example, may be approximately 10 to 25 parts by mass, preferably 12 to 23 parts by mass, and more preferably 15 to 20 parts by mass, based on 100 parts by mass of the rubber component, and for example, may be approximately 10 to 20 parts by mass (particularly 12 to 18 parts by mass). In the case where the proportion of short fibers is too small, there is a possibility that the mechanical characteristic of the compression rubber layer may be decreased. On the contrary, in the case of too large, there is a possibility that dispersibility of the short fibers in the rubber composition is decreased in addition to decrease in the power transmission efficiency, poor dispersion occurs, and cracks may occur in the compression rubber layer at an early stage starting from that point.

From the viewpoint of dispersibility and adhesiveness of the short fibers in the rubber composition, short fibers are preferably subjected to at least an adhesion treatment (or surface treatment). It is not necessary that all the short fibers are subjected to an adhesion treatment, and the short fibers subjected to an adhesion treatment and the short fibers not subjected to adhesion treatment (untreated short fibers) may be mixed or used in combination.

The adhesion treatment of the short fibers can be treated with various adhesion treatments, for example, a treatment liquid containing an initial condensate (prepolymer of novolak or resol type phenolic resin) of phenols and formalin, a treatment liquid containing a rubber component (or latex), a treatment liquid containing the initial condensate and a rubber component (latex), and a treatment liquid containing reactive compound (adhesive compound) such as a silane coupling agent, an epoxy compound (epoxy resin, etc.), and an isocyanate compound. In a preferred adhesion treatment, the short fibers are treated with a treatment liquid containing the initial condensate and a rubber component (latex), particularly at least with a resorcinol-formalin-latex (RFL) liquid. Such treatment liquids may be used in combination. For example, the short fibers may be pretreated with a normal adhesive component, for example, a reactive compound (adhesive compound) of an epoxy compound (epoxy resin, etc.) and an isocyanate compound and thereafter, treated with the RFL liquid.

In the case where a treatment with such a treatment liquid, particularly the RFL liquid is performed, the short fibers and the rubber component can be firmly adhered. The RFL liquid is a mixture of an initial condensate of resorcin and formaldehyde and a rubber latex. The molar ratio of resorcin and formaldehyde can be set within a range where the adhesiveness between the rubber component and the short fibers can be improved, for example, the former/latter = approximately 1/0.5 to 1/3, preferably 1/0.6 to 1/2.5, more preferably 1/0.7 to 1/1.5, and may be approximately 1/0.5 to 1/1 (e.g., 1/0.6 to 1/0.8). The kind of the latex is not particularly limited, and can be appropriately selected from the rubber components described below depending on the kind of the rubber component to be bonded. For example, in the case where the rubber component to be adhered contains chloroprene rubber as a main component, the latex may be a diene rubber (natural rubber, isoprene rubber, butadiene rubber, chloroprene rubber, styrene butadiene rubber (SBR), styrene-butadiene-vinylpyridine terpolymer, acrylonitrile butadiene rubber (nitrile rubber), hydrogenated acrylonitrile butadiene rubber (hydrogenated nitrile rubber), etc.), ethylene-$\alpha$-olefin elastomer, chlorosulfonated polyethylene rubber, alkylated chlorosulfonated polyethylene rubber, or the like. These latex may be used alone or in combination of two or more kinds thereof. The preferred latex is a diene rubber (styrene-butadiene-vinylpyridine terpolymer, chloroprene rubber, butadiene rubber, etc.) or a chlorosulfonated polyethylene rubber, and a styrene-butadiene-vinylpyridine terpolymer is preferable for further improving the adhesiveness. In the case where the short fibers are subjected to an adhesion treatment with the treatment liquid (RFL liquid, etc.) containing at least a styrene-butadiene-vinylpyridine terpolymer, the adhesiveness between the rubber composition (chloroprene rubber composition, etc.) and the short fibers can be improved.

The proportion of the initial condensate of resorcin and formalin may be approximately 10 to 100 parts by mass (e.g., 12 to 50 parts by mass and preferably 15 to 30 parts by mass) based on 100 parts by mass of the rubber component of the latex. The total solid content concentration of the RFL liquid can be adjusted within a range of 5% to 40% by mass.

The adhesion rate of the adhesive component (solid content) to the short fibers [(mass after adhesion treatment - mass before adhesion treatment)/(mass after adhesion treatment) × 100] is, for example, 1% to 25% by mass, preferably 3% to 20% by mass, and more preferably 5% to 15% by mass, and may be approximately 3% to 10% by mass (particularly 4% to 8% by mass). In the case where the adhesion ratio of the adhesive component is too small, the dispersibility of the short fibers in the rubber composition and the adhesiveness between the short fibers and the rubber composition are insufficient. On the contrary, in the case of too large, there is a possibility that the adhesive component firmly bonds the fiber filaments to each other and the dispersibility is rather decreased.

The method of preparing the short fibers subjected to an adhesive treatment is not particularly limited, and use can be made of, for example, a method in which long fibers of multifilament are impregnated into an adhesive treatment liquid, dried and then, cut into a predetermined length, a method in which untreated short fibers are immersed in an adhesive treatment liquid for a predetermined period of time, and an excess adhesive treatment liquid is removed by a method such as centrifugal separation, followed by drying, and the like.

(Rubber Component)

Examples of the rubber component include a known rubber component and/or elastomer, for example, diene rubbers [natural rubber, isoprene rubber, butadiene rubber, chloroprene rubber, styrene butadiene rubber (SBR), acrylonitrile butadiene rubber (nitrile rubber), hydrogenated nitrile rubber (including a mixed polymer of hydrogenated nitrile rubber and unsaturated carboxylic acid metal salt), etc.], ethylene-$\alpha$-olefin elastomers, chlorosulfonated polyethylene rubbers, alkylated chlorosulfonated polyethylene rubbers, epichlorohydrin rubbers, acrylic rubbers, silicone rubbers, urethane rubbers, fluorine rubbers, and the like. These rubber components can be used alone or in combination of two or more kinds thereof.

Among these rubber components, ethylene-$\alpha$-olefin elastomers (ethylene-$\alpha$-olefin rubbers such as ethylene-propylene copolymer (EPM), and ethylene-propylene-diene terpolymer (EPDM, etc.)) and chloroprene rubber are preferable, and chloroprene rubber is particularly preferable from the viewpoint that a vulcanizing agent and a vulcanization accelerator are easily diffused. The chloroprene rubber may be a sulfur-modified type or a non-sulfur-modified type.

In the case where the rubber component contains chloroprene rubber, the proportion of chloroprene rubber in the rubber component may be approximately 50% by mass or more (particularly 80% to 100% by mass), and is particularly preferably 100% by mass (chloroprene rubber only).

(Additive)

If necessary, the rubber composition may contain a vulcanizing agent or crosslinking agent (or crosslinking agent series), a co-crosslinking agent, a vulcanization aid, a vulcanization accelerator, a vulcanization retardant, metal oxide (e.g., zinc oxide, magnesium oxide, calcium oxide, barium oxide, iron oxide, copper oxide, titanium oxide, aluminum oxide, etc.), an enforcing agent (carbon black, silicon oxide such as hydrous silica), a filler (clay, calcium carbonate, talc, mica, etc.), a softening agent (oils such as naphthene oil, etc.), a processing agent or processing aid (stearic acid, metal stearate, etc.), an antioxidant (antioxidant, heat aging inhibitor, flex crack preventive, ozone deterioration inhibitor, etc.), a colorant, a tackifier, a plasticizer, a coupling agent (a silane coupling agent, etc.), a stabilizer (an ultraviolet absorber, a heat stabilizer, etc.), a flame retardant, an antistatic agent, and the like. The metal oxide may act as a crosslinking agent.

As the vulcanizing agent or crosslinking agent, normal components can be used depending on the type of the rubber component, and examples thereof include the above-mentioned metal oxides (magnesium oxide, zinc oxide, etc.), organic peroxides (diacyl peroxide, peroxyester, dialkyl peroxide, etc.), a sulfur vulcanizing agent, and the like. Examples of the sulfur vulcanizing agent include powdered sulfur, precipitated sulfur, colloidal sulfur, insoluble sulfur, highly dispersible sulfur, sulfur chloride (sulfur monochloride, sulfur dichloride, etc.), and the like. These crosslinking agents or vulcanizing agents may be used alone or in combination of two or more kinds thereof. In the case where the rubber component is chloroprene rubber, the metal oxide (magnesium oxide, zinc oxide, etc.) may be used as the vulcanizing agent or crosslinking agent. The metal oxide may be used in combination with another vulcanizing agent (sulfur vulcanizing agent, etc.), and the metal oxide and/or the sulfur vulcanizing agent may be used alone or in combination with the vulcanization accelerator.

The proportion of the vulcanizing agent can be selected from the range of approximately 1 to 20 parts by mass based on 100 parts by mass of the rubber component depending on the kind of the vulcanizing agent and the rubber component. For example, the proportion of the organic peroxide as the vulcanizing agent can be selected from the range of approximately 1 to 8 parts by mass, preferably 1.5 to 5 parts by mass, and more preferably 2 to 4.5 parts by mass, based on 100 parts by mass of the rubber component. The proportion of the metal oxide can be selected from the range of approximately 1 to 20 parts by mass, preferably 3 to 17 parts by mass, and more preferably 5 to 15 parts by mass (particularly 7 to 13 parts by mass), based on 100 parts by mass of the rubber component.

Examples of the co-crosslinking agent (crosslinking aid or co-vulcanizing agent co-agent) include known crosslinking aids such as multifunctional (iso)cyanurates [e.g., triallyl isocyanurate (TAIC) and triallyl cyanurate TAC), etc.], polydienes (e.g., 1,2-polybutadiene, etc.), metal salts of unsaturated carboxylic acids [e.g., zinc (meth)acrylate, magnesium (meth)acrylate, etc.], oximes (e.g., quinone dioxime, etc.), guanidines (e.g., diphenylguanidine, etc.), polyfunctional (meth)acrylates [e.g., ethylene glycol di(meth)acrylate, butanediol di(meth)acrylate, trimethylolpropane tri(meth)acrylate, etc.], bismaleimides (aliphatic bismaleimide such as N, N'-1,2-ethylene bismaleimide, 1,6'-bismaleimide-(2,2,4-trimethyl)cyclohexane; arene bismaleimide or aromatic bismaleimide such as N-N'-m-phenylene bismaleimide, 4-methyl-1,3-phenylebismaleimide, 4,4'-diphenylmethane bismaleimide, 2,2-bis[4-(4-maleimidophenoxy)phenyl]propane, 4,4'-diphenyl ether bismaleimide, 4,4'-diphenylsulfone bismaleimide, 1,3-bis(3-maleimidophenoxy)benzene, etc.), and the like. These crosslinking aids can be used alone or in combination of two or more kinds thereof. Of these crosslinking aids, bismaleimides (arene bismaleimide such as N,N'-m-phenylenedimaleimide or aromatic bismaleimide) are preferred. The addition of a bismaleimide can increase the degree of crosslinking and prevent adhesion abrasion and the like.

The proportion of the co-crosslinking agent (crosslinking aid) can be selected from the range of approximately 0.01 to 10 parts by mass based on 100 parts by mass of the rubber component, in terms of solid content, and for example, may be approximately 0.1 to 5 parts by mass (e.g., 0 3 to 4 parts by mass), and preferably 0.5 to 3 parts by mass (e.g., 0.5 to 2 parts by mass).

Examples of the vulcanization accelerator include thiuram accelerators [e.g., tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT), N,N'-dimethyl-N,N'-diphenylthiuram disulfide, etc.], thiazole accelerators [e.g., 2-mercaptobenzothiazole, a zinc salt of 2-mercaptobenzothiazole, 2-mercaptothiazoline, dibenzothiazyl disulfide, 2-(4'-morpholinodithio)benzothiazole, etc.), etc.], sulfenamide accelerators [e.g., N-cyclohexyl-2-benzothiazyl sulfenamide (CBS), N,N'-dicyclohexyl-2-benzothiazyl sulfenamide, etc.], bismaleimide accelerators (e.g., N,N'-m-phenylene bismaleimide, N,N'-1,2-ethylene bismaleimide, etc.), guanidines (e.g., diphenylguanidine, di-o-tolylguanidine, etc.), urea or thiourea accelerators (e.g., ethylene thiourea, etc.), dithiocarbamic acid salts, xanthogenates, and the like. These vulcanization accelerators can be used alone or in combination of two or more kinds thereof. Of these vulcanization accelerators, TMTD, DPTT, CBS and the like are widely used.

The proportion of the vulcanization accelerator may be, for example, approximately 0.1 to 15 parts by mass, preferably 0.3 to 10 parts by mass, and more preferably 0.5 to 5 parts by mass, based on 100 parts by mass of the rubber component, in terms of solid content.

The proportion of the enforcing agent (carbon black, silica, etc.) may be approximately 10 to 100 parts by mass (preferably 20 to 80 parts by mass, and more preferably 30 to 70 parts by mass), based on 100 parts by mass of the total amount of the rubber component. In addition, the proportion of the softening agent (oils such as naphthene oil) may be, for example, approximately 1 to 30 parts by mass, and preferably 3 to 20 parts by mass (e.g., 5 to 10 parts by mass), based on 100 parts by mass of the total amount of the rubber component. The proportion of the antioxidant may be, for example, approximately 0.5 to 15 parts by mass, preferably 1 to 10 parts by mass, and more preferably 2.5 to 7.5 parts by mass (particularly 3 to 7 parts by mass), based on 100 parts by mass of the total amount of the rubber component.

[Tension Rubber Layer]

The tension rubber layer may be formed of the vulcanized rubber composition containing the rubber component exemplified as the compression rubber layer, and the short fibers may be contained similar to the compression rubber layer. Furthermore, the tension rubber layer may be the layer formed of the same vulcanized rubber composition as the compression rubber layer, or a layer formed from the same vulcanizable rubber composition as the compression rubber layer except for the lubricant.

[Adhesion Rubber Layer]

Similar to the vulcanizable rubber composition for the compression rubber layer, the rubber composition for forming the adhesion rubber layer may contain a rubber component (chloroprene rubber, etc.), a vulcanizing agent or crosslinking agent (metal an oxide such as magnesium oxide and zinc oxide, a sulfur vulcanizing agent such as sulfur, etc.), a co-crosslinking agent or crosslinking aid, (a maleimide crosslinking agent such as N,N'-m-phenylenedimaleimide, etc.), a vulcanization accelerator (TMTD, DPTT, CBS, etc.), an enhancing agent (carbon black, silica, etc.), a softening agent (oils such as naphthene oil, etc.), a processing agent or processing aid (stearic acid, metal stearate, wax, paraffin, etc.), an antioxidant, an adhesion improver [resorcinol-formaldehyde cocondensates, amino resins (a condensate of a nitrogen-containing cyclic compound and formaldehyde, such as a melamine resin such as hexamethylol melamine, a hexaalkoxymethyl melamine (hexamethoxymethyl melamine, hexabutoxymethyl melamine, etc.), a urea resin such as methylol urea, a benzoguanamine resin such as methylol benzoguanamine resin, etc.), and cocondensates thereof (resorcinol-melamine-formaldehyde co-condensate, etc.), etc.], a filler (clay, calcium carbonate, talc, mica, etc.), a colorant, a tackifier, a plasticizer, a coupling agent (a silane coupling agent, etc.), a stabilizer (an ultraviolet absorber, a heat stabilizer, etc.), a flame retardant, an antistatic agent, and the like. In the adhesion improver, the resorcin-formaldehyde cocondensate and the amino resin may be an initial condensate (prepolymer) of resorcin and/or a nitrogen-containing cyclic compound such as melamine with formaldehyde.

In this rubber composition, as the rubber component, rubber of the same type (diene rubbers, etc.) or the same kind (chloroprene rubber, etc.) as the rubber component of the rubber composition of the compression rubber layer is used in many cases. In addition, the use amount of the vulcanizing agent or crosslinking agent, the co-crosslinking agent or crosslinking aid, the vulcanization accelerator, the enhancing agent, the softening agent, and the antioxidant can be selected from the same range as those of the rubber composition of the compression rubber layer, respectively. In addition, in the rubber composition of the adhesion rubber layer, the proportion of the processing agent or processing aid (stearic acid, etc.) may be approximately 0.1 to 10 parts by mass, preferably 0.5 to 5 parts by mass, and more preferably 1 to 3 parts by mass, based on 100 parts by mass of the rubber component. In addition, the proportion of the adhesion improver (resorcinol-formaldehyde cocondensate, hexamethoxymethyl melamine, etc.) may be approximately 0.1 to 20 parts by mass, preferably 1 to 10 parts by mass, and more preferably 2 to 8 parts by mass, based on 100 parts by mass of the rubber component.

[Tension Member]

Although the tension member is not particularly limited, generally, cords (twisted cords) disposed at predetermined intervals in the width direction of the belt can be used. The cords are disposed to extend in the longitudinal direction of the belt and are normally disposed to extend in parallel at a predetermined pitch parallel to the longitudinal direction of the belt. The cord only has to be in contact with the adhesion rubber layer at a part thereof, and any of a form in which the adhesion rubber layer buries the cord, a form in which the cord is buried between the adhesion rubber layer and the tension rubber layer, and a form in which the cord is buried between the adhesion rubber layer and the compression rubber layer may be employed. Among them, from the viewpoint of improving the durability, the form in which the adhesion rubber layer buries the cord is preferred.

As the fibers constituting the cord, the same fibers as that of the short fibers can be exemplified. Among the above fibers, from the viewpoint of high modulus, use can be widely made of polyester fibers (polyalkylene arylate fibers) having $C_{2-4}$ alkylene arylate such as ethylene terephthalate and ethylene-2,6-naphthalate as a main constituent unit, synthetic fibers such as an aramid fiber, inorganic fibers such as a carbon fiber, and the like, and the polyester fibers (polyethylene terephthalate fibers and polyethylene naphthalate fibers) and the polyamide fibers are preferred. The fibers may be multifilament yarns. The fineness of the multifilament yarns may be, for example, approximately 2,000 to 10,000 denier (particularly 4,000 to 8,000 denier). The multifilament yarns may contain, for example, approximately 100 to 5,000, preferably 500 to 4,000, and more preferably 1,000 to 3,000 monofilament yarns.

As the cord, normally, twisted cords (e.g., plied twists, single twists, Lang's twists, etc.) using multifilament yarns can be used. The average core diameter of the cord (fiber diameter of the twisted cord) may be, for example, approximately 0.5 to 3 mm, preferably 0.6 to 2 mm, and more preferably 0.7 to 1.5 mm.

The cord may be subjected to an adhesion treatment (or surface treatment) in the same manner as in the short fibers in order to improve the adhesiveness to the rubber component. The cord is preferably subjected to the adhesion treatment with at least RFL liquid, as in the short fibers.

[Reinforcing Fabric]

In the case of using a reinforcing fabric in the frictional power transmission belt, it is not limited to a form of laminating the reinforcing fabric on the surface of the compression rubber layer. For example, a reinforcing fabric may be laminated on the surface of the tension rubber layer (surface opposite to the adhesion rubber layer), or a reinforcing layer may be buried in the compression rubber layer and/or the tension rubber layer (e.g., a form described in JP-A-2010-230146, etc.). The reinforcing fabric can be formed of, for example, a fabric material (preferably a woven fabric) such as a woven fabric, a wide angle canvas, a knitted fabric, an unwoven fabric. If necessary, the reinforcing fabric may be laminated on the surface of the compression rubber layer and/or the tension rubber layer after the above-described adhesion treatment, for example, a treatment (immersion treatment, etc.) with an RFL liquid, a friction for rubbing an adhesive rubber into the fabric material, or laminating the adhesive rubber and the fabric material.

[Manufacturing Method of Frictional Power Transmission Belt]

The frictional power transmission belt of the present invention is obtained through a lubricant exposing step of causing the lubricant containing wax to be present on at least a portion of the frictional power transmission surface. The lubricant exposing step is not particularly limited as long as it is a method capable of exposing the lubricant on at least a portion of the frictional power transmission surface. Examples thereof include a method of attaching a lubricant or a rubber composition containing a lubricant to a frictional power transmission surface of the belt [method of attaching a lubricant to a frictional power transmission surface by coating, adhesion, or the like, method of laminating a rubber composition containing a lubricant (e.g., a liquid rubber composition containing a lubricant, etc.) on a frictional power transmission surface to form a surface rubber layer containing the lubricant, etc.], a method of making a lubricant contained inside a compression rubber layer bloom to a frictional power transmission surface in a manufacturing process of the belt, and the like. Among these methods, from the viewpoint that the lubricant can be present on the frictional power transmission surface over a long period of time and the productivity of the belt can be improved, preferred is the method of making the lubricant contained inside a compression rubber layer bloom to the frictional power transmission surface in the manufacturing process of the belt, that is, a method in which the lubricant is exuded on the frictional power transmission surface through a vulcanizing step of vulcanizing a rubber composition containing a rubber component, short fibers, and a lubricant to obtain a belt sleeve, and a cutting step of cutting the obtained belt sleeve in the longitudinal direction of the belt to form a compression rubber layer (particularly, additionally, grinding step of grinding the side surface of the compression rubber layer obtained in the cutting step to protrude the short fibers). In this method, a conventional step for manufacturing the frictional power transmission belt also serves as the lubricant exposing step.

There is no particular limitation except for the lubricant exposing step, and a conventional method can be used for a laminating step (manufacturing method of a belt sleeve) of each layer, depending on the type of the belt.

For example, in the case of a cogged V-belt, a laminated body including a reinforcing fabric (lower fabric) and a compression rubber layer sheet (unvulcanized rubber sheet) may be installed on a flat cogged mold in which tooth portions and groove portions are alternately disposed, with the reinforcing fabric downward, and pressed at a temperature of approximately 60°C to 100°C (particularly 70°C to 80°C) to prepare a cog pad having a cog portion molded (pad which is not completely vulcanized and is in a semi-vulcanized state), and thereafter, both ends of the cog pad may be cut perpendicularly from a top portion of a cog ridge portion. Then, a cylindrical mold may be covered with an inner mother die in which tooth portions and groove portions are alternately disposed, the cog pad may be wound to engage with the tooth portions and the groove portions and jointed at the top portion of the cog ridge portion, and a first adhesion rubber layer sheet (lower adhesion rubber: unvulcanized rubber sheet) may be laminated on the wound cog pad. Thereafter, a cord (twisted cord) forming a tension member may be spun into spiral shape, and a second adhesion rubber layer sheet (upper adhesion rubber: the same as the above adhesion rubber layer sheet), a tension rubber layer sheet (unvulcanized rubber sheet), and a reinforcing fabric (upper fabric) may be sequentially wound thereon to prepare a molded body. Thereafter, the mold may be covered by a jacket, installed in a vulcanizing can, vulcanized at a temperature of approximately 120°C to 200°C (particularly 150°C to 180°C) to undergo a vulcanizing step of preparing a belt sleeve. Thereafter, the belt sleeve may be subjected to a cutting step of cutting into a V-shaped cross section by using a cutter or the like. In the cutting step, blooming of the lubricant contained inside the compression rubber layer on the frictional power transmission surface can be promoted by the frictional heat generated when cutting the belt sleeve with a cutter or the like.

In the method of making the lubricant contained inside the compression rubber layer bloom on the frictional power transmission surface, the lubricant and the short fibers are compounded in the rubber composition for forming the compression rubber layer and mixed (kneaded), so that the lubricant and the short fibers are dispersed in the rubber composition in the kneading step.

As a method for arranging the orientation direction of the short fibers to the width direction of the belt in the tension rubber layer sheet and the compression rubber layer sheet, a conventional method can be exemplified, for example, a method in which rubber is passed between a pair of calender rolls provided with a predetermined gap and rolled into a sheet shape, both side surfaces of the rolled sheet in which the short fibers are oriented in the rolling direction are cut in a direction parallel to the rolling direction, the rolled sheet is further cut in a direction perpendicular to the rolling direction so as to be a belt forming width (length in the belt width direction), and the side surfaces cut in the direction parallel to the rolling direction are jointed with each other, and the like. For example, the method described in JP-A-2003-14054 can be used. The unvulcanized sheet in which the short fibers are oriented by such a method is placed so that the orientation direction of the short fibers is in the width direction of the belt, and vulcanized, in the above-described method.

The manufacturing method of the present invention may further include a grinding step of grinding at least the side surface of the compression rubber layer among the frictional power transmission surface to protrude the short fibers. As a method of grinding the compression rubber layer, a conventional method can be used. For example, a method in which the belt is hung between a drive pulley and a driven pulley, and a rotating grinding tool is brought into contact with the side surface of the belt and ground while rotating and running the belt under a predetermined tension in the longitudinal direction of the belt, or the like can be used. As the grinding tool, for example, sanding sheet or the like can be used. The grinding method may be, for example, the grinding method described in JP-A-2008-44017. Even in the grinding step, the blooming of the lubricant contained inside the compression rubber layer to the frictional power transmission surface can be promoted by the frictional heat generated during grinding.

[Power Transmission Efficiency]

When the frictional power transmission belt provided with the compression rubber layer of the present invention is used, the power transmission efficiency can be significantly improved. The power transmission efficiency is an index that the belt transmits a rotational torque from a drive pulley to a driven pulley, and means that the higher the power transmission efficiency, the smaller the power transmission loss of the belt and the better fuel saving performance. In a biaxial layout in which the belt 11 is hung on two pulleys of a drive pulley (Dr.) 12 and a driven pulley (Dn.) 13 illustrated in FIG. 7, a power transmission efficiency can be obtained as follows.

When a rotation speed of the drive pulley is $\rho_1$ and its pulley radius is $r_1$, the rotational torque $T_1$ of the drive pulley can be represented as $\rho_1 \times T_e \times r_1$. $T_e$ is an effective tension obtained by subtracting a tension on a slack side (tension on a side where the belt runs toward the driven pulley) from a tension on a tight side (tension on a side where the belt runs toward the drive pulley). Similarly, when a rotation speed of the driven pulley is $\rho_2$ and its pulley radius is $r_2$, a rotational torque $T_2$ of the driven pulley is represented as $\rho_2 \times T_e \times r_2$. The power transmission efficiency $T_2/T_1$ is calculated by dividing the rotational torque $T_2$ of the driven pulley by the rotational torque $T_1$ of the drive pulley and can be represented by a following equation.

$$T_2/T_1 = (\rho_2 \times T_e \times r_2)/(\rho_1 \times T_e \times r_1) = (\rho_2 \times r_2)/(\rho_1 \times r_1)$$

The value of the power transmission efficiency is 1 when there is no power transmission loss, and when there is some power transmission loss, the value decreases by that loss. That is, it means that the closer to 1, the smaller the power transmission loss of the belt and the better fuel saving performance.

EXAMPLE

Hereinafter, the present invention will be described in more detail based on Examples, but the present invention is not limited to these Examples. In the following Examples, the raw materials used in Examples, the measurement methods or the evaluation methods for each physical property are explained below. Unless otherwise specified, "parts" and "%" are on a mass basis.

[Raw Material]

Chloroprene rubber: "Denka Chloroprene DCR" manufactured by Denka KK
Aramid short fiber: "Conex Short Fiber" manufactured by Teijin Techno Products Co., Ltd., average fiber length of 3 mm, average fiber diameter of 14 μm
Vinyl pyridine-styrene-butadiene copolymer latex: manufactured by Zeon Corporation
Wax A: "Santite C" manufactured by Seiko Chemical Co., Ltd., a mixture of paraffin and microcrystalline wax, melting point of approximately 50°C
Wax B: "Santite R" manufactured by Seiko Chemical Co., Ltd., a mixture of paraffin and microcrystalline wax, melting point of approximately 80°C
Wax C: "Santite SW" manufactured by Seiko Chemical Co., Ltd., a mixture of paraffin and oleic acid amide, melting point of approximately 120°C
Fatty acid amide: "Amide AP-1" manufactured by Nippon Kasei Chemical Co., Ltd., stearic acid amide, melting point of 101°C
Ether ester plasticizer: "Adeka Sizer RS-700" manufactured by ADEKA Corporation
Graphite: "AT-20" manufactured by Oriental Industrial Co., Ltd.
Silicone oil: "SH 200" manufactured by Dow Corning Toray Co., Ltd.
Plasticizer: Sebacate oil manufactured by DIC Corporation
Carbon black: "Seast3" manufactured by Tokai Carbon Co., Ltd.
Silica: "Nipsil VN3" manufactured by Tosoh Silica Co., Ltd.
Antioxidant: "Nonflex OD3" manufactured by Seiko Chemical Industry Co., Ltd.
Cord: Fibers obtained through an adhesion treatment of cord having a total denier of 6,000 obtained by subjecting 1,000 denier PET fibers to plied twist in a 2 × 3 twist configuration with a first twist coefficient of 3.0 and a second twist coefficient of 3.0.

[Measurement of Physical Properties of Belt]

(1) Measurement of Friction Coefficient

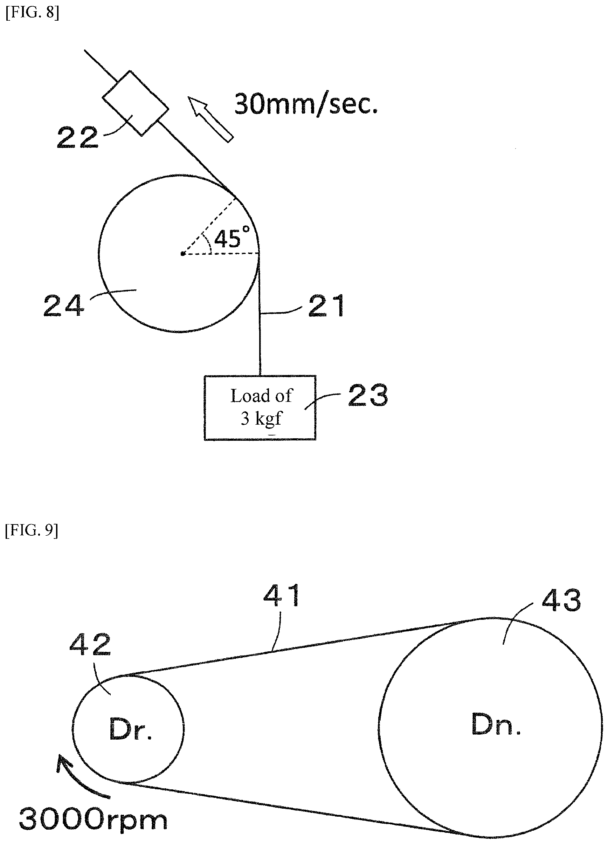

As illustrated in FIG. 8, for a friction coefficient of the belt, one end of the cut belt 21 was fixed to a load cell 22, a load 23 of 3 kgf was placed on the other end thereof, and the belt 21 was wound around the pulley 24 so that the winding angle of the belt to the pulley 24 was set to be 45°. The belt 21 on the load cell 22 side was pulled at a speed of 30 mm/sec for approximately 15 seconds, and the average friction coefficient of the frictional power transmission surface was measured. Upon measurement, the pulley 24 was fixed so as not to rotate. In Tables 4 and 5, the friction coefficient for each Example and Comparative Example was represented in relative value converted by taking the friction coefficient of Comparative Example 1 as "100".

(2) High-Load Running Test (Power Transmission Efficiency)

In this running test, a power transmission efficiency of the belt was evaluated when the belt was run in a state of being largely bent (wound around a small pulley).

As illustrated in FIG. 9, a high-load running test was performed by using a biaxial running tester including a drive (Dr.) pulley 42 having a diameter of 50 mm and a driven (Dn.) pulley 43 having a diameter of 125 mm. A raw-edge cogged V-belt 41 was hung on each of the pulleys 42 and 43, a load of 3 N·m was applied to the driven pulley 43, and the belt 41 was run under a room temperature atmosphere at a rotation speed of 3,000 rpm of the drive pulley 42. The surface temperature of the belt reached a maximum of 90°C during running. Immediately after running, the rotation speed of the driven pulley 43 was read from a detector, and the power transmission efficiency was obtained from the above-mentioned calculation formula. In Tables 4 and 5, the power transmission efficiency for each Example and Comparative Example was represented in relative value converted by taking the power transmission efficiency of Comparative Example 1 as "100".

(3) High-Speed Running Test (Power Transmission Efficiency)

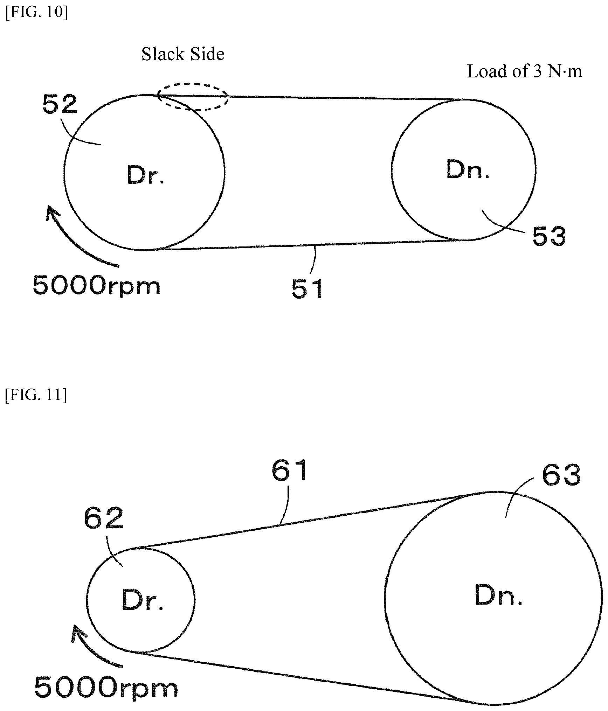

In this running test, a power transmission efficiency of the belt was evaluated when running in a state where the belt was made slide on the pulley outward in the radial direction of the pulley. Specifically, when the rotation speed of the drive pulley increases, a centrifugal force strongly acts on the belt. In addition, at the position of the slack side of the drive pulley (refer to FIG. 10), the belt tension acts low, and due to the combined action with the centrifugal force, the belt attempts to jump outward in the radial direction of the pulley at this position. In the case where this jumping out is not smoothly performed, that is, the frictional force strongly acts between the frictional power transmission surface of the belt and the pulley, a power transmission loss of the belt is generated by the frictional force, and the power transmission efficiency decreases.

As illustrated in FIG. 10, a high-speed running test was performed by using a biaxial running tester including a drive (Dr.) pulley 52 having a diameter of 95 mm and a driven (Dn.) pulley 53 having a diameter of 85 mm. A raw-edge cogged V-belt 51 was hung on each of the pulleys 52 and 53, a load of 3 N·m was applied to the driven pulley 53, and the belt 51 was run under a room temperature atmosphere at a rotation speed of 5,000 rpm of the drive pulley 52. The surface temperature of the belt reached a maximum of 60°C during running. Immediately after running, the rotation speed of the driven pulley 53 was read from a detector, and the power transmission efficiency was obtained from the above-mentioned calculation formula. In Tables 4 and 5, the power transmission efficiency for each Example and Comparative Example was represented in relative value converted by taking the power transmission efficiency of Comparative Example 1 as "100".

Regarding the power transmission efficiency test, the results of (2) the high-load running test and (3) the high-speed running test were collectively evaluated based on the following criteria.

A: 100 or more in both the high-load condition and the high-speed condition, and more than 102 in either one
B: 100 or more and 102 or less in both the high-load condition and the high-speed condition
C: less than 100 in either of the high-load condition and the high-speed condition

(4) Durability Running Test (Lateral Pressure Resistance)

As illustrated in FIG. 11, the durability running test was performed by using a biaxial running tester including a drive (Dr.) pulley 62 having a diameter of 50 mm and a driven (Dn.) Pulley 63 having a diameter of 125 mm. A raw-edge cogged V-belt 61 was hung on each of the pulleys 62 and 63, a load of 10 N·m was applied to the driven pulley 63, and the belt 61 was run at an atmospheric temperature of 80°C for a maximum of 40 hours at a rotation speed of 5,000 rpm of the drive pulley 62. The surface temperature of the belt reached a maximum of 120°C during running. The side surface of the cog portion of the raw-edge cogged V-belt 61 after running was visually observed, the occurrence rate of cracks was calculated from the number of cog portions where cracks starting from the short fibers occurred per 100 cog portions, and evaluation was made based on the following criteria.

A: Crack occurrence is 0%
B: Crack occurrence is more than 0 to less than 10%
C: Crack occurrence is 10% or more

Examples 1 to 11 and Comparative Examples 1 to 7

(Formation of Rubber Layer)

Each of the rubber compositions of Tables 1 and 2 (compression rubber layer and tension rubber layer) and Table 3 (adhesion rubber layer) was subjected to rubber kneading by using a known method such as a Banbury mixer and the kneaded rubber was passed through a calender roll to prepare a rolled rubber sheet (compression rubber layer sheet, tension rubber layer sheet, and adhesion rubber layer sheet). The short fibers were subjected to an adhesion treatment with an RFL liquid (containing resorcin and formaldehyde, and vinyl pyridine-styrene-butadiene rubber latex as latex), and the short fibers having a solid content adhesion rate of 6% by mass were used. The RFL liquid containing 2.6 parts by mass of resorcin, 1.4 parts by mass of 37% formalin, 17.2 parts by mass of vinyl pyridine-styrene-butadiene copolymer latex, and 78.8 parts by mass of water was used.

[Table 1]

Table 1 (Compression Rubber Layer and Tension Rubber Layer)

| | Example (parts) | | | | | | | | | | |
|---|---|---|---|---|---|---|---|---|---|---|---|
| | 1 | 2 | 3 | 4 | 5 | 6 | 7 | 8 | 9 | 10 | 11 |
| Chloroprene rubber | 100 | 100 | 100 | 100 | 100 | 100 | 100 | 100 | 100 | 100 | 100 |
| Aramid short fiber | 15 | 15 | 15 | 15 | 15 | 15 | 15 | 15 | 15 | 20 | 15 |
| Wax A (melting point of 50°C) | 0.5 | 1 | 3 | 6 | 10 | 3 | 3 | 2 | - | 2 | 3 |
| Wax B (melting point of 80°C) | - | - | - | - | - | 3 | - | 2 | - | 2 | - |
| Wax C (melting point of 120°C) | - | - | - | - | - | - | 3 | 2 | 6 | 2 | - |
| Fatty acid amide | - | - | - | - | - | - | - | - | - | - | 1.5 |
| Carbon black | 35 | 35 | 35 | 35 | 35 | 35 | 35 | 35 | 35 | 35 | 35 |
| Magnesium oxide | 4 | 4 | 4 | 4 | 4 | 4 | 4 | 4 | 4 | 4 | 4 |
| Antioxidant | 4 | 4 | 4 | 4 | 4 | 4 | 4 | 4 | 4 | 4 | 4 |
| Zinc oxide | 5 | 5 | 5 | 5 | 5 | 5 | 5 | 5 | 5 | 5 | 5 |
| N,N'-m-phenylenedimaleimide | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 |
| Sulfur | 0.5 | 0.5 | 0.5 | 0.5 | 0.5 | 0.5 | 0.5 | 0.5 | 0.5 | 0.5 | 0.5 |

[Table 2]

Table 2 (Compression Rubber Layer and Tension Rubber Layer)

| | Comparative Example (parts) | | | | | | |
|---|---|---|---|---|---|---|---|
| | 1 | 2 | 3 | 4 | 5 | 6 | 7 |
| Chloroprene rubber | 100 | 100 | 100 | 100 | 100 | 100 | 100 |
| Aramid short fiber | 15 | 20 | 25 | 15 | 15 | 15 | 15 |
| Fatty acid amide | - | - | - | 3 | - | - | - |
| Ether ester plasticizer | - | - | - | - | 3 | - | - |
| Graphite | - | - | - | - | - | 3 | - |
| Silicone oil | - | - | - | - | - | - | 3 |
| Carbon black | 35 | 30 | 25 | 35 | 35 | 32 | 35 |
| Magnesium oxide | 4 | 4 | 4 | 4 | 4 | 4 | 4 |
| Antioxidant | 4 | 4 | 4 | 4 | 4 | 4 | 4 |
| Zinc oxide | 5 | 5 | 5 | 5 | 5 | 5 | 5 |
| N ,N'-m-phenylenedimaleimide | 2 | 2 | 2 | 2 | 2 | 2 | 2 |
| Stearic acid | 2 | 2 | 2 | 2 | 2 | 2 | 2 |
| Sulfur | 0.5 | 0.5 | 0.5 | 0.5 | 0.5 | 0.5 | 0.5 |

[Table 3]

Table 3 (Adhesion Rubber Layer)

| Example and Comparative Example (parts) | |
|---|---|
| Chloroprene rubber | 100 |
| Plasticizer | 5 |
| Magnesium oxide | 4 |
| Silica | 30 |
| Carbon black | 20 |
| Resorcin-formalin copolymer | 2 |
| Antioxidant | 4 |
| Zinc oxide | 5 |
| Vulcanization accelerator TMTD | 1 |
| Stearic acid | 2 |
| Hexamethoxymethyl melamine | 2 |

(Manufacture of Belt)

A laminated body of a reinforcing fabric and a compression rubber layer sheet (unvulcanized rubber) was installed on a flat cogged mold in which tooth portions and groove portions were alternately disposed, with the reinforcing fabric downward, and pressed at 75°C to prepare a cog pad having a cog portion molded (which was not completely vulcanized, and was in a semi-vulcanized state). Thereafter, both ends of the cog pad were cut perpendicularly from a top portion of a cog ridge portion.

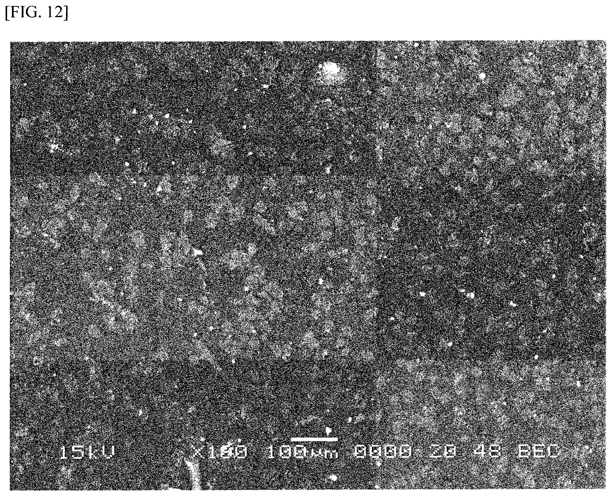

A cylindrical mold was covered with an inner mother die in which tooth portions and groove portions were alternately disposed, the cog pad was wound to engage with the tooth portions and the groove portions and jointed at the top portion of the cog ridge portion. An adhesion rubber layer sheet (lower adhesive rubber: unvulcanized rubber) was laminated on the wound cog pad. Thereafter, a cord was spun into spiral shape, and another adhesion rubber layer sheet (upper adhesive rubber: the same as the above adhesion rubber layer sheet), a tension rubber layer sheet (unvulcanized rubber), and a reinforcing fabric (upper fabric) were sequentially wound thereon to prepare a molded body. Thereafter, the mold was covered by a jacket, installed in a vulcanizing can, and vulcanized at a temperature of 160°C and for 20 minutes to obtain a belt sleeve. The belt sleeve was cut into a V-shape cross-sectional shape with a cutter and both side surfaces of the belt were ground, to thereby prepare a raw-edge cogged V-belt (size: upper width of 22.0 mm, thickness of 11.0 mm, and outer peripheral length of 800 mm) which was a belt having the structure illustrated in FIG. 2, that is, a variable speed belt having a cog on the inner peripheral side of the belt. In the belts obtained in Examples, the lubricant layer was formed on the surface of the compression rubber layer (frictional power transmission surface) after grinding, and the short fibers protruded from the surface of the lubricant layer at an average height of 60 $\mu$m. Furthermore, an electron micrograph of the surface of the compression rubber layer of Example 4 is shown in FIG. 12. The white portion of the drawing is the short fibers and the black portion is the lubricant.

The evaluation results of the belts obtained in Examples and Comparative Examples are shown in Tables 4 and 5.

[Table 4]

Table 4

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Aramid short fiber | 15 | 15 | 15 | 15 | 15 | 15 | 15 | 15 | 15 | 20 | 15 |
| Wax A (melting point of 50°C) | 0.5 | 1 | 3 | 6 | 10 | 3 | 3 | 2 | - | 2 | 3 |
| Wax B (melting point of 80°C) | - | - | - | - | - | 3 | - | 2 | - | 2 | - |
| Wax C (melting point of 120°C) | - | - | - | - | - | - | 3 | 2 | 6 | 2 | - |
| Fatty acid amide | - | - | - | - | - | - | - | - | - | - | 1.5 |
| Friction coefficient | 90 | 85 | 75 | 73 | 70 | 72 | 72 | 76 | 75 | 70 | 75 |
| Power transmission efficiency | B | B | C | C | C | A | A | A | B | A | A |
| High-load condition (maximum 90°C) | 100.0 | 100.0 | 99.0 | 97.0 | 95.0 | 100.0 | 102.0 | 102.0 | 102.0 | 104.0 | 100.0 |
| High-speed condition (maximum 60°C) | 100.5 | 101.5 | 103.0 | 104.0 | 105.0 | 105.0 | 104.0 | 105.0 | 102.0 | 106.0 | 103.0 |
| Durability (maximum 120°C) | B | A | A | A | B | A | A | A | A | B | A |
| Occurrence rate of cracks (%) | 5 | 0 | 0 | 0 | 5 | 0 | 0 | 0 | 0 | 2 | 0 |

[Table 5]

Table 5

| | Comparative Example | | | | | | |
|---|---|---|---|---|---|---|---|
| | 1 | 2 | 3 | 4 | 5 | 6 | 7 |
| Aramid short fiber | 15 | 20 | 25 | 15 | 15 | 15 | 15 |
| Fatty acid amide | - | - | - | 3 | - | - | - |
| Ether ester plasticizer | - | - | - | - | 3 | - | - |
| Graphite | - | - | - | - | - | 3 | - |
| Silicone oil | - | - | - | - | - | - | 3 |
| Friction coefficient | 100 | 80 | 75 | 91 | 100 | 95 | 90 |
| Power transmission efficiency | - | A | A | B | C | B | B |
| High-load condition (maximuin 90°C) | 100.0 | 101.0 | | 100.0 | 98.0 | 100.5 | 100.0 |
| High-speed condition (maximum 60°C) | 100.0 | 103.0 | 104.0 | 100.5 | 100.0 | 100.0 | 100.5 |
| Durability (maximum 120°C) | C | C | C | C | C | C | C |
| Occurrence rate of cracks (%) | 10 | 30 | 100 | 10 | 15 | 10 | 10 |

As is clear from the results of Tables 4 and 5, Comparative Examples 2 and 3 are examples in which wax was not added and the blending amount of the short fibers was increased as compared with Comparative Example 1. Although as the amount of short fibers increased, the friction coefficient decreased and the power transmission efficiency (fuel saving performance) improved, the occurrence rate of cracks increased in the durability test.

In Comparative Examples 4 to 7, fatty acid amide (Comparative Example 4), ether ester plasticizer (Comparative Example 5), graphite (Comparative Example 6), or silicone oil (Comparative Example 7) was used without including wax. The friction coefficient did not decrease much from Comparative Example 1, and the power transmission efficiency was not improved. In addition, in Comparative Examples 5 to 7, the occurrence rate of cracks slightly increased.

In Examples 1 to 11 to which wax was added, the friction coefficient was decreased and the power transmission efficiency was improved as compared with Comparative Example 1. In addition, except for Examples 1, 5, and 10, the cracks did not occur and the durability was good. In Example 5 in which 10 parts by mass of wax was blended and in Example 10 in which 20 parts by mass of short fibers were blended, although the cracks were slightly generated, the occurrence rate of cracks was significantly reduced as compared with Comparative Examples 2 and 3 in which only the amount of short fibers was increased.

Examples 1 to 5 are examples in which wax A (melting point: approximately 50°C) was blended in Comparative Example 1, and the power transmission efficiency at the high-speed condition (surface temperature of belt was maximum 60°C) was improved as the blending amount increased as compared with Comparative Example 1. On the other hand, the power transmission efficiency at the high-load condition (maximum 90°C) in Examples 3 to 5 in which the blending amount of wax A was increased was lower than that of Comparative Example 1. It is considered that since the belt surface temperature was as high as 90°C at the maximum higher than the melting point (approximately 50°C) of the wax A, the wax precipitated on the frictional power transmission surface melted and the lubricating effect decreased.

In Example 9 in which 6 parts by mass of wax C having a high melting point (melting point of approximately 120°C) was blended, as compared with Example 4 in which the same 6 parts by mass of wax A having a low melting point (melting point of approximately 50°C) was blended, the power transmission efficiency at the high-load condition (maximum 90°C) was high and the power transmission efficiency at the high-speed condition (surface temperature of belt was maximum 60°C) was low. The reason why the power transmission efficiency was low at the high-speed condition is considered to be because the melting point of wax was higher than the belt surface temperature by approximately 60°C and it was difficult to bloom on the frictional power transmission surface.

Specifically, among the Examples, Examples 6 to 8 in which waxes having different melting points were used in combination achieved good balance between the power transmission efficiency and the durability in that good power transmission efficiency in both the high-load condition (maximum 90°C) and the high-speed condition (maximum 60°C) was achieved and no cracks occurred.

Example 10 is the same as Example 8 in that 2 parts by mass of each of waxes A, B, and C were blended. Although the power transmission efficiency is good, the occurrence rate of cracks slightly increased, probably because the amount of short fibers was larger than that in Example 8.

Example 11 is an example in which wax and the fatty acid amide were used in combination as the lubricant. In Comparative Example 4 in which only the fatty acid amide was blended, the durability was insufficient, and in Example 3 in which only the wax was blended, the power transmission efficiency at the high-load condition was slightly lower. However, in Example 11 in which the wax and the fatty acid amide were used in combination, both the power transmission efficiency and the durability were evaluated to be A, and remarkable effects were obtained by combining these lubricants. In addition, the wax C used in Example 9 was a mixture of paraffin and oleic acid amide, and both the power transmission efficiency and the durability could be achieved without separately adding the fatty acid amide.

Although the present invention has been described in detail and with reference to specific embodiments, it will be apparent to those skilled in the art that various modifications and variations can be made without departing from the scope of the present invention.

INDUSTRIAL APPLICABILITY

The frictional power transmission belt of the present invention can be applied to, for example, a V-belt (wrapped V-belt, raw-edge V-belt, and raw-edge cogged V-belt), a V-ribbed belt, a flat belt, or the like. Specifically, it is preferably applied to a V-belt (variable speed belt) used in a transmission (continuously variable transmission device) in which the gear ratio varies steplessly while the belt is running, for example, a raw-edge cogged V-belt and a raw-edge double cogged V-belt used for a continuously variable transmission device of a motorcycle, an ATV (4 wheel buggy), a snowmobile, and the like.

REFERENCE SIGNS LIST

1       Frictional power transmission belt
2, 6    Reinforcing fabric
3       Tension rubber layer
4       Adhesion rubber layer
4a      Tension member
5       Compression rubber layer
7       Short fiber
8       Lubricant

**Claims**

1. A frictional power transmission belt (1) comprising a compression rubber layer (5) having a frictional power transmission surface of which at least a portion is contactable with a pulley and formed of a vulcanization product of a rubber composition comprising a rubber component and short fibers (7),
   wherein a lubricant (8) comprising wax is present on at least a portion of the frictional power transmission surface:

   **characterized in that** the frictional power transmission belt (1) is a raw-edge cogged V-belt,
   wherein the proportion of the lubricant (8) is 3 to 8 parts by mass based on 100 parts by mass of the rubber component.

2. The frictional power transmission belt (1) according to Claim 1,
   wherein an area ratio occupied by the lubricant (8) to an entire frictional power transmission surface is 50% or more.

3. The frictional power transmission belt (1) according to Claim 1 or 2,
   wherein the lubricant (8) has a melting point of a vulcanization temperature of the compression rubber layer (5) or lower.

4. The frictional power transmission belt (1) according to any one of Claims 1 to 3,
   wherein the lubricant (8) comprises a lubricant (8) having a melting point with a difference of $\pm 30°C$ from an operating temperature of the belt.

**5.** The frictional power transmission belt (1) according to any one of Claims 1 to 4,
wherein the lubricant (8) further comprises a fatty acid amide.

**6.** The frictional power transmission belt (1) according to any one of Claims 1 to 5,
wherein the rubber composition comprises the lubricant (8).

**7.** The frictional power transmission belt (1) according to any one of Claims 1 to 6,
wherein a proportion of the short fibers (7) is 30 parts by mass or less based on 100 parts by mass of the rubber component.

**8.** The frictional power transmission belt according to any one of Claims 1 to 7,
wherein the short fibers protrude on the frictional power transmission surface.

**9.** The frictional power transmission belt according to Claim 8,
wherein the lubricant forms a lubricant layer on the frictional power transmission surface and the short fibers protrude from the surface of the lubricant layer.

**10.** The frictional power transmission belt (1) according to any one of Claims 1 to 9,
wherein the short fibers (7) are oriented in a width direction of the belt.

**11.** The frictional power transmission belt (1) according to any one of Claims 1 to 10,
wherein the rubber component comprises chloroprene rubber.

**12.** A method for manufacturing the frictional power transmission belt (1) described any one of Claims 1 to 11, comprising:
a lubricant exposing step of causing a lubricant (8) comprising wax to be present on at least a portion of a frictional power transmission surface;
wherein the frictional power transmission belt (1) is a raw-edge cogged V-belt, wherein the proportion of the lubricant (8) is 3 to 8 parts by mass based on 100 parts by mass of the rubber component.

**13.** The manufacturing method according to Claim 12,
wherein the lubricant exposing step comprises a vulcanizing step of vulcanizing a rubber composition containing a rubber component and short fibers (7) to obtain a belt sleeve, and a cutting step of cutting the obtained belt sleeve in a longitudinal direction of the belt to form a compression rubber layer (5).

**14.** The manufacturing method according to Claim 13,
wherein the lubricant exposing step further comprises a grinding step of grinding a side surface of the compression rubber layer (5) obtained in the cutting step to protrude the short fibers.

**Patentansprüche**

**1.** Reibungskraftübertragungsriemen (1), umfassend eine Kompressionskautschukschicht (5), die eine Reibungskraftübertragungsoberfläche aufweist, von der mindestens ein Abschnitt von einer Umlenkrolle kontaktierbar ist und aus einem Vulkanisierungsprodukt einer Kautschukzusammensetzung geformt ist, die einen Kautschukbestandteil und kurze Fasern (7) umfasst,
wobei ein Gleitmittel (8), das Wachs umfasst, auf mindestens einem Abschnitt der Reibungskraftübertragungsoberfläche vorhanden ist:

**dadurch gekennzeichnet, dass** der Reibungskraftübertragungsriemen (1) ein gratkantiger Zahnkeilriemen ist, wobei die Proportion des Gleitmittels (8) 3 zu 8 Masseteile auf der Grundlage von 100 Masseteilen des Kautschukbestandteils ist.

**2.** Reibungskraftübertragungsriemen (1) nach Anspruch 1,
wobei ein Verhältnis der von dem Gleitmittel (8) belegten Flächen zu einer gesamten Reibungskraftübertragungsoberfläche 50 % oder mehr beträgt.

**3.** Reibungskraftübertragungsriemen (1) nach Anspruch 1 oder 2,
wobei das Gleitmittel (8) einen Schmelzpunkt einer Vulkanisierungstemperatur der Kompressionskautschukschicht (5) oder niedriger aufweist.

4. Reibungskraftübertragungsriemen (1) nach einem der Ansprüche 1 bis 3, wobei das Gleitmittel (8) ein Gleitmittel (8) umfasst, das einen Schmelzpunkt mit einer Differenz von ± 30 °C von einer Betriebstemperatur des Riemens aufweist.

5. Reibungskraftübertragungsriemen (1) nach einem der Ansprüche 1 bis 4, wobei das Gleitmittel (8) weiter ein Fettsäureamid umfasst.

6. Reibungskraftübertragungsriemen (1) nach einem der Ansprüche 1 bis 5, wobei die Kautschukzusammensetzung das Gleitmittel (8) umfasst.

7. Reibungskraftübertragungsriemen (1) nach einem der Ansprüche 1 bis 6, wobei eine Proportion der kurzen Fasern (7) 30 Masseteile oder weniger auf der Grundlage von 100 Masseteilen des Kautschukbestandteils ist.

8. Reibungskraftübertragungsriemen nach einem der Ansprüche 1 bis 7, wobei die kurzen Fasern auf der Reibungskraftübertragungsoberfläche vorstehen.

9. Reibungskraftübertragungsriemen nach Anspruch 8, wobei das Gleitmittel auf der Reibungskraftübertragungsoberfläche eine Gleitmittelschicht formt, und die kurzen Fasern von der Oberfläche der Gleitmittelschicht vorstehen.

10. Reibungskraftübertragungsriemen (1) nach einem der Ansprüche 1 bis 9, wobei die kurzen Fasern (7) in eine Breitenrichtung des Riemens ausgerichtet sind.

11. Reibungskraftübertragungsriemen (1) nach einem der Ansprüche 1 bis 10, wobei der Kautschukbestandteil Chloropren-Kautschuk umfasst

12. Verfahren zur Herstellung des in einem der Ansprüche 1 bis 11 beschriebenen Reibungskraftübertragungsriemens (1), umfassend:

   einen Schritt des Exponierens von Gleitmittel zum Verursachen eines Gleitmittels (8), das Wachs umfasst, damit es an mindestens einem Abschnitt einer Reibungskraftübertragungsoberfläche vorhanden ist; wobei der Reibungskraftübertragungsriemen (1) ein gratkantiger Zahnkeilriemen ist, wobei die Proportion des Gleitmittels (8) 3 zu 8 Masseteile auf der Grundlage von 100 Masseteilen des Kautschukbestandteils ist.

13. Herstellungsverfahren nach Anspruch 12, wobei der Schritt des Exponierens von Gleitmittel einen Vulkanisierungsschritt einer Kautschukzusammensetzung umfasst, die einen Kautschukbestandteil und kurze Fasern (7) enthält, um einen Riemenmantel zu erhalten, und einen Schneideschritt des Schneidens des erhaltenen Riemenmantels in eine Längsrichtung des Riemens, um eine Kompressionskautschukschicht (5) zu formen.

14. Herstellungsverfahren nach Anspruch 13, wobei der Schritt des Exponierens von Gleitmittel weiter einen Schleifschritt einer seitlichen Oberfläche der im Schneideschritt erhaltenen Kompressionskautschukschicht (5) umfasst, damit die kurzen Fasern vorstehen.

## Revendications

1. Courroie de transmission de puissance par friction (1) comprenant une couche de caoutchouc de compression (5) présentant une surface de transmission de puissance par friction dont au moins une portion peut être mise en contact avec une poulie et constituée d'un produit de vulcanisation d'une composition de caoutchouc comprenant un composant de caoutchouc et des fibres courtes (7), dans laquelle un lubrifiant (8) comprenant une cire est présent sur au moins une portion de la surface de transmission de puissance par friction :

   **caractérisée en ce que** la courroie de transmission de puissance par friction (1) est une courroie trapézoïdale crantée à arêtes vives,
dans laquelle la proportion du lubrifiant (8) est de 3 à 8 parties en masse sur la base de 100 parties en masse du composant de caoutchouc.

2.  Courroie de transmission de puissance par friction (1) selon la revendication 1,
    dans laquelle un rapport entre l'aire occupée par le lubrifiant (8) et une surface de transmission de puissance par friction complète est de 50 % ou plus.

3.  Courroie de transmission de puissance par friction (1) selon la revendication 1 ou 2,
    dans laquelle le lubrifiant (8) présente un point de fusion d'une température de vulcanisation de la couche de caoutchouc de compression (5) ou inférieure.

4.  Courroie de transmission de puissance par friction (1) selon l'une quelconque des revendications 1 à 3,
    dans laquelle le lubrifiant (8) comprend un lubrifiant (8) présentant un point de fusion avec une différence de $\pm 30$ °C par rapport une température de fonctionnement de la courroie.

5.  Courroie de transmission de puissance par friction (1) selon l'une quelconque des revendications 1 à 4,
    dans laquelle le lubrifiant (8) comprend en outre un amide d'acide gras.

6.  Courroie de transmission de puissance par friction (1) selon l'une quelconque des revendications 1 à 5,
    dans laquelle la composition de caoutchouc comprend le lubrifiant (8).

7.  Courroie de transmission de puissance par friction (1) selon l'une quelconque des revendications 1 à 6,
    dans laquelle une proportion des fibres courtes (7) est de 30 parties en masse ou moins sur la base de 100 parties en masse du composant de caoutchouc.

8.  Courroie de transmission de puissance par friction selon l'une quelconque des revendications 1 à 7,
    dans laquelle les fibres courtes font saillie sur la surface de transmission de puissance par friction.

9.  Courroie de transmission de puissance par friction selon la revendication 8,
    dans laquelle le lubrifiant forme une couche de lubrifiant sur la surface de transmission de puissance par friction et les fibres courtes font saillie depuis la surface de la couche de lubrifiant.

10. Courroie de transmission de puissance par friction (1) selon l'une quelconque des revendications 1 à 9,
    dans laquelle les fibres courtes (7) sont orientées dans une direction de largeur de la courroie.

11. Courroie de transmission de puissance par friction (1) selon l'une quelconque des revendications 1 à 10,
    dans laquelle le composant de caoutchouc comprend du caoutchouc chloroprène.

12. Procédé de fabrication de la courroie de transmission de puissance par friction (1) selon l'une quelconque des revendications 1 à 11, comprenant :

    une étape d'exposition de lubrifiant pour amener un lubrifiant (8) comprenant une cire à être présent sur au moins une portion d'une surface de transmission de puissance par friction ;
    dans lequel la courroie de transmission de puissance par friction (1) est une courroie trapézoïdale crantée à arêtes vives, dans lequel la proportion du lubrifiant (8) est de 3 à 8 parties en masse sur la base de 100 parties en masse du composant de caoutchouc.

13. Procédé de fabrication selon la revendication 12,
    dans lequel l'étape d'exposition de lubrifiant comprend une étape de vulcanisation consistant à vulcaniser une composition de caoutchouc contenant un composant de caoutchouc et des fibres courtes (7) pour obtenir un manchon de courroie, et une étape de découpage consistant à découper le manchon de courroie obtenu dans une direction longitudinale de la courroie pour former une couche de caoutchouc de compression (5).

14. Procédé de fabrication selon la revendication 13,
    dans lequel l'étape d'exposition de lubrifiant comprend en outre une étape de meulage consistant à meuler une surface latérale de la couche de caoutchouc de compression (5) obtenue à l'étape de découpage pour que les fibres courtes fassent saillie.

[FIG. 1]

(a)

(b)

[FIG. 2]

[FIG. 3]

[FIG. 4]

[FIG. 5]

[FIG. 6]

[FIG. 7]

Tension on Slack Side

Tension on Tight Side

[FIG. 8]

[FIG. 9]

[FIG. 10]

Slack Side

Load of 3 N·m

52

Dr.

Dn.

53

5000rpm

51

[FIG. 11]

61

63

62

Dr.

Dn.

5000rpm

[FIG. 12]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10238596 A
- JP 2012241831 A
- JP 2013024349 A
- JP 2015152101 A
- JP 2007092987 A
- JP 2010151209 A

- EP 0722053 A2
- JP H0798044 A
- JP H07151191 A
- JP 2010230146 A
- JP 2003014054 A
- JP 2008044017 A